# EUROPEAN PATENT APPLICATION

(11) **EP 4 340 163 A1**
(43) Date of publication of application: **20.03.2024**
(21) Application number: 22807078.5
(22) Date of filing: 25.02.2022
(51) Int. Cl.: H02J 7/00, A24F 40/40, A24F 40/50, A24F 40/65

(54) **POWER SUPPLY UNIT FOR AEROSOL GENERATION DEVICE**

(30) Priority: 10.05.2021 JP 2021079893
(71) Applicant: Japan Tobacco, Inc., Tokyo, 105-6927 (JP)
(72) Inventor: AOYAMA, Tatsunari, Tokyo 130-8603 (JP); KAWANAGO, Hiroshi, Tokyo 130-8603 (JP); NAGAHAMA, Toru, Tokyo 130-8603 (JP); FUJIKI, Takashi, Tokyo 130-8603 (JP); YOSHIDA, Ryo, Tokyo 130-8603 (JP)
(74) Representative: Hoffmann Eitle
(86) International application number: PCT/JP2022/007916
(87) International publication number: WO 2022/239371

(57) **Abstract**

Provided is an aerosol generation device for which safety is enhanced. An aspirator (100) comprises: a heater connector Cn to which a heater HTR, which heats a rod (500) by consuming power supplied from a power supply BAT, is connected; a thermistor T3, which is disposed near the heater HTR and which outputs a value relating to the temperature of the heater HTR; and a thermistor T4, which is provided in a position spaced apart from the thermistor T3 and which outputs a value relating to the temperature in the position. When the output value of the thermistor T3 and/or the output value of the thermistor T4 is abnormal, charging of the power supply BAT and discharging from the power supply BAT to the heater HTR is prohibited.

## Description

### TECHNICAL FIELD

The present invention relates to a power supply unit of an aerosol generation device.

### BACKGROUND ART

Patent Literature 1 discloses a device that includes a portable charger and an aerosol generation device including a battery and an aerosol generation element. In this device, the portable charger includes a thermistor that detects a temperature of a housing of the aerosol generation device, and when the temperature detected by the thermistor falls below 10°C, a coil around the battery of the aerosol generation device is operated to prevent a temperature of the battery from falling to 10°C.

Patent Literature 2 discloses a device for protection from overcurrent and overvoltage using a comparator.

### CITATION LIST

### PATENT LITERATURE

Patent Literature 1: Japanese Patent Application Laid-Open Publication No. 2019-525737
Patent Literature 2: US Patent Application Publication No. 2020/0000146

### SUMMARY OF INVENTION

### TECHNICAL PROBLEM

In the aerosol generation device configured to inhale an aerosol, heat generating components such as a power supply and a heater are provided in a housing of the aerosol generation device. It is important to prevent such components from generating heat in a high-temperature environment in order to improve safety.

An object of the invention is to provide an aerosol generation device with improved safety.

### SOLUTION TO PROBLEM

A power supply unit of an aerosol generation device according to one aspect of the invention includes: a power supply; a heater connector to which a heater configured to heat an aerosol source by consuming power supplied from the power supply is connected; a first sensor disposed in the vicinity of the heater or the power supply and configured to output a value related to a temperature of the heater or a value related to a temperature of the power supply; and a second sensor provided at a position separated from the first sensor and configured to output a value related to a temperature at the position, in which, when at least one of the output value of the first sensor and the output value of the second sensor is abnormal, at least one or both of charging of the power supply and discharging from the power supply to the heater are temporarily prohibited.

### ADVANTAGEOUS EFFECTS OF INVENTION

According to the invention, an aerosol generation device with improved safety can be provided.

### BRIEF DESCRIPTION OF DRAWINGS

[FIG. 1] FIG. 1 is a perspective view of a non-combustion-type inhaler.
[FIG. 2] FIG. 2 is a perspective view of the non-combustion-type inhaler in a state where a rod is attached.
[FIG. 3] FIG. 3 is another perspective view of the non-combustion-type inhaler.
[FIG. 4] FIG. 4 is an exploded perspective view of the non-combustion-type inhaler.
[FIG. 5] FIG. 5 is a perspective view of an internal unit of the non-combustion-type inhaler.
[FIG. 6] FIG. 6 is an exploded perspective view of the internal unit in FIG. 5.
[FIG. 7] FIG. 7 is a perspective view of the internal unit from which a power supply and a chassis are detached.
[FIG. 8] FIG. 8 is another perspective view of the internal unit from which the power supply and the chassis are detached.
[FIG. 9] FIG. 9 is a schematic diagram illustrating operation modes of the inhaler.
[FIG. 10] FIG. 10 is a diagram illustrating a schematic configuration of an electric circuit of the internal unit.
[FIG. 11] FIG. 11 is a diagram illustrating a schematic configuration of the electric circuit of the internal unit.
[FIG. 12] FIG. 12 is a diagram illustrating a schematic configuration of the electric circuit of the internal unit.
[FIG. 13] FIG. 13 is a diagram illustrating an operation of the electric circuit in a sleep mode.
[FIG. 14] FIG. 14 is a diagram illustrating an operation of the electric circuit in an active mode.
[FIG. 15] FIG. 15 is a diagram illustrating an operation of the electric circuit in a heating initial setting mode.
[FIG. 16] FIG. 16 is a diagram illustrating an operation of the electric circuit during heating by a heater in a heating mode.
[FIG. 17] FIG. 17 is a diagram illustrating an operation of the electric circuit when a temperature of the heater is detected in the heating mode.
[FIG. 18] FIG. 18 is a diagram illustrating an operation of the electric circuit in a charging mode.
[FIG. 19] FIG. 19 is a diagram illustrating an operation of the electric circuit when an MCU is reset (restarted).
[FIG. 20] FIG. 20 is a schematic diagram illustrating a detection process of an inhaling operation by the MCU using a puff thermistor.
[FIG. 21] FIG. 21 is a circuit diagram of main parts of the electric circuit illustrated in FIG. 10 with main electronic components related to a thermistor extracted.
[FIG. 22] FIG. 22 is a diagram illustrating an extracted portion of a range AR surrounded by a broken line in FIG. 21.
[FIG. 23] FIG. 23 is a diagram illustrating a specific example of a pattern of protection control executed by the inhaler.
[FIG. 24] FIG. 24 is a flowchart illustrating an example of operations of a remaining amount meter IC and the MCU in a case where a high-temperature notification signal is output from the remaining amount meter IC in a state of the sleep mode.
[FIG. 25] FIG. 25 is a sectional view taken along a section passing through a case thermistor T4 of the inhaler illustrated in FIG. 1.
[FIG. 26] FIG. 26 is a sectional view taken along a section passing through the case thermistor T4 of the inhaler illustrated in FIG. 1.

### DESCRIPTION OF EMBODIMENTS

Hereinafter, an inhaling system as an embodiment of an aerosol generation device according to the invention will be described with reference to the drawings. The inhaling system includes a non-combustion-type inhaler 100 (hereinafter, also simply referred to as an "inhaler 100") which is an embodiment of a power supply unit according to the invention, and a rod 500 heated by the inhaler 100. In the following description, a configuration is described as an example in which the inhaler 100 accommodates a heating unit in a detachable manner. However, the heating unit may be detachable from the inhaler 100. For example, a unit in which the rod 500 and the heating unit are integrated may be detachably attached to the inhaler 100. That is, a power supply unit of the aerosol generation device may not include the heating unit as a component. The term "detachable" refers to a mode in which detachment cannot be performed as long as intended use. Alternatively, an induction heating coil provided in the inhaler 100 and a susceptor built in the rod 500 may cooperate to constitute the heating unit.

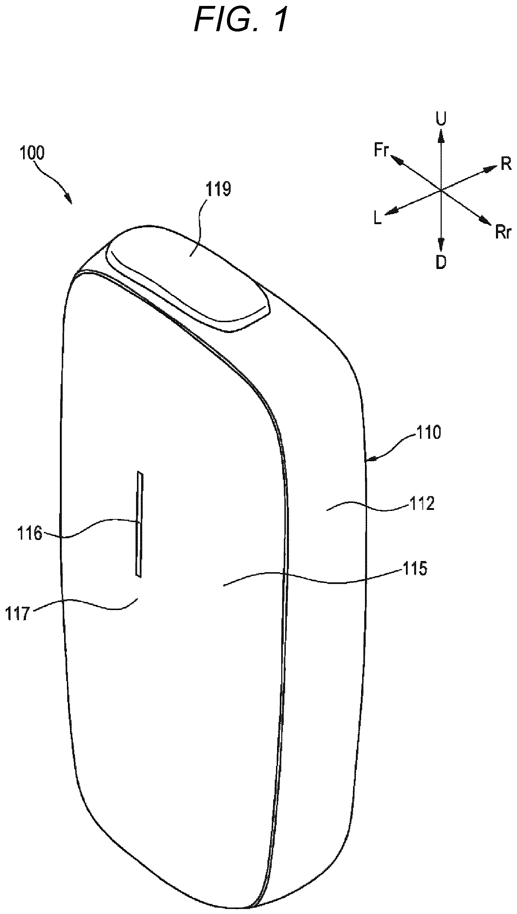

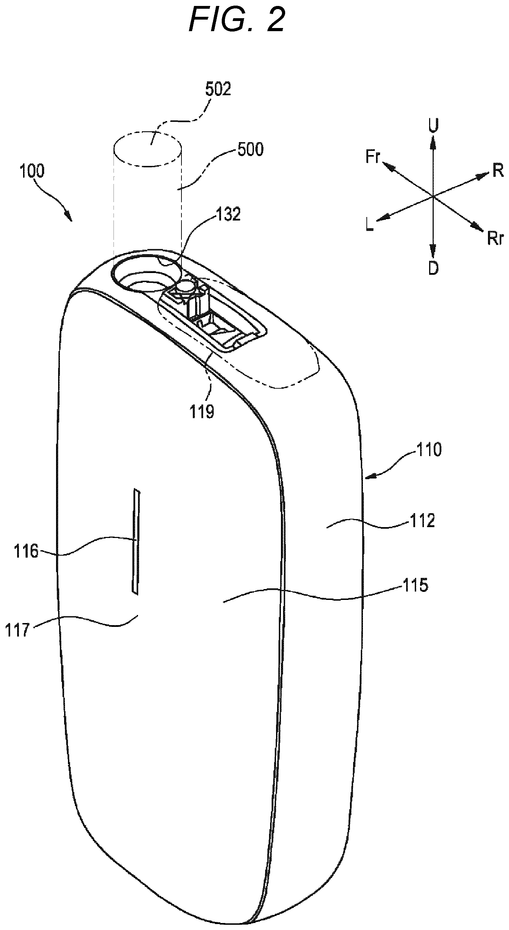

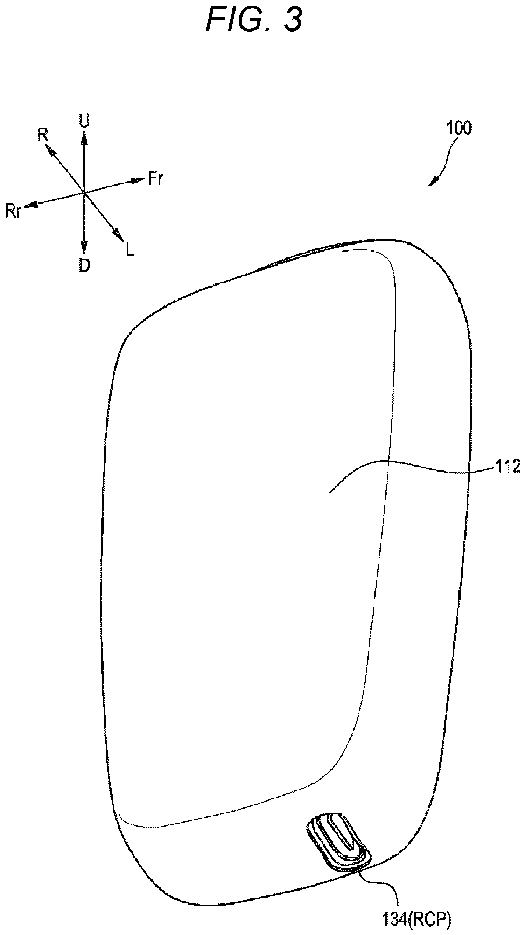

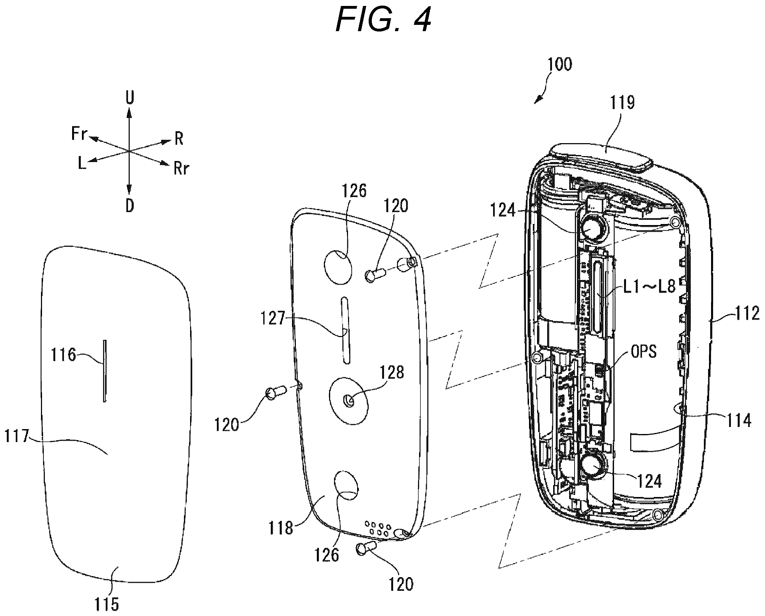

FIG. 1 is a perspective view illustrating an overall configuration of the inhaler 100. FIG. 2 is a perspective view of the inhaler 100 in a state where the rod 500 is attached. FIG. 3 is another perspective view of the inhaler 100. FIG. 4 is an exploded perspective view of the inhaler 100. In the following description, the invention will be described using an orthogonal coordinate system of a three-dimensional space in which three directions orthogonal to one another are defined as a front-rear direction, a left-right direction, and an up-down direction. In the drawings, a front side is denoted by Fr, a rear side is denoted by Rr, a right side is denoted by R, a left side is denoted by L, an upper side is denoted by U, and a lower side is denoted by D.

The inhaler 100 is configured to generate a flavor-containing aerosol by heating an elongated substantially cylindrical rod 500 (see FIG. 2) as an example of a flavor component generation base material including a filler containing an aerosol source and a flavor source.

### <Flavor Component Generation Base Material (Rod)>

The rod 500 includes a filler that is heated at a predetermined temperature and contains an aerosol source that generates aerosol.

The type of aerosol source is not particularly limited, and an extract substance from various natural products and/or a constituent component thereof can be selected depending on an application. The aerosol source may be a solid, or may be, for example, a polyhydric alcohol such as glycerin or propylene glycol or a liquid such as water. The aerosol source may include flavor sources such as tobacco raw materials for releasing flavor component and extract derived from tobacco raw materials by heating. The gas to which the flavor component is added is not limited to the aerosol, and for example, invisible steam may be generated.

The filler of the rod 500 may contain cut tobacco as the flavor source. Materials for the cut tobacco are not particularly limited, and known materials such as lamina and backbone can be used. The filler may contain one kind or two or more kinds of fragrance. The type of the fragrance is not particularly limited, and is preferably menthol from the viewpoint of imparting good taste. The flavor source may contain a plant other than tobacco (for example, mint, Chinese medicine, or herb). Depending on the application, the rod 500 may not contain a flavor source

### <Overall Configuration of Non-combustion Inhaler>

Next, the overall configuration of the inhaler 100 will be described with reference to FIGS. 1 to 4.

The inhaler 100 includes a substantially rectangular parallelepiped case 110 having a front surface, a rear surface, a left surface, a right surface, an upper surface, and a lower surface. The case 110 includes a bottomed tubular case body 112 in which the front surface, the rear surface, the upper surface, the lower surface, and the right surface are integrally formed, an outer panel 115 and an inner panel 118 that seal an opening 114 (see FIG. 4) of the case body 112 to form the left surface, and a slider 119.

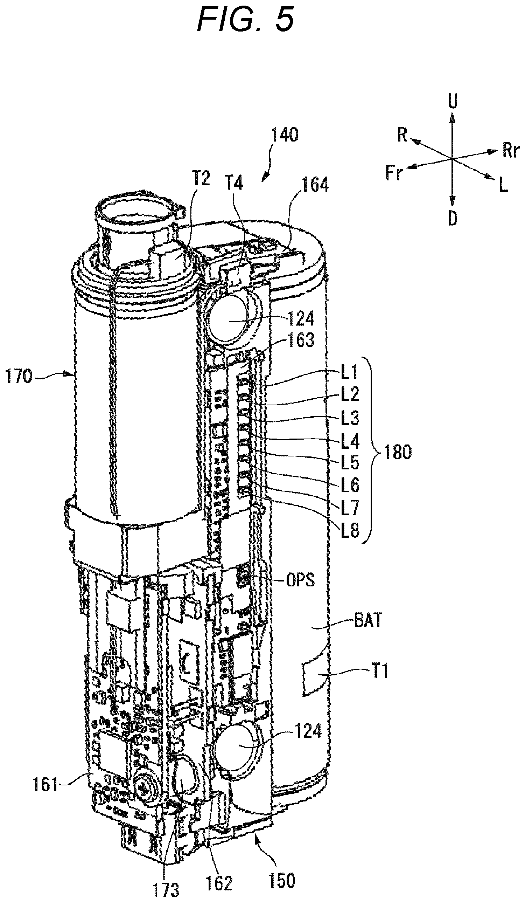

The inner panel 118 is fixed to the case body 112 with bolts 120. The outer panel 115 is fixed to the case body 112 so as to cover an outer surface of the inner panel 118 by magnets 124 held by a chassis 150 (to be described later) (see FIG. 5) that is housed in the case body 112. The outer panel 115 is fixed by the magnets 124, so that a user can replace the outer panel 115 as desired.

The inner panel 118 is provided with two through holes 126 through which the magnets 124 pass. The inner panel 118 is further provided with a vertically long hole 127 and a circular round hole 128 between the two vertically arranged through holes 126. The long hole 127 transmits light emitted from eight LEDs (Light Emitting Diodes) L1 to L8 built in the case body 112. A button-type operation switch OPS built in the case body 112 penetrates the round hole 128. Accordingly, the user can detect the light emitted from the eight LEDs L1 to L8 through a LED window 116 of the outer panel 115. The user can press down the operation switch OPS via a pressing portion 117 of the outer panel 115.

As illustrated in FIG. 2, an opening 132 into which the rod 500 can be inserted is provided on an upper surface of the case body 112. The slider 119 is coupled to the case body 112 to be movable in the front-rear direction between a position where the opening 132 is closed (see FIG. 1) and a position where the opening 132 is opened (see FIG. 2).

The operation switch OPS is used to perform various operations of the inhaler 100. For example, the user operates the operation switch OPS via the pressing portion 117 in a state where the rod 500 is inserted into the opening 132 and attached as illustrated in FIG. 2. Accordingly, a heating unit 170 (see FIG. 5) heats the rod 500 without burning the rod 500. When the rod 500 is heated, an aerosol is generated from the aerosol source contained in the rod 500, and the flavor of the flavor source contained in the rod 500 is added to the aerosol. The user can inhale the aerosol containing the flavor by holding a mouthpiece 502 of the rod 500 protruding from the opening 132 to inhale.

As illustrated in FIG. 3, a charging terminal 134 that is electrically connected to an external power supply such as an outlet or a mobile battery and receives power supply is provided on a lower surface of the case body 112. In the present embodiment, the charging terminal 134 is a USB (Universal Serial Bus) Type-C receptacle, but is not limited thereto. Hereinafter, the charging terminal 134 will also be referred to as a receptacle RCP.

The charging terminal 134 may include, for example, a power receiving coil, and may wirelessly receive power transmitted from the external power supply. In this case, a method of power transfer (Wireless Power Transfer) may be an electromagnetic induction type, a magnetic resonance type, or a combination of the electromagnetic induction type and the magnetic resonance type. As another example, the charging terminal 134 may be connectable to various USB terminals or the like, and may include the above-described power receiving coil.

A configuration of the inhaler 100 illustrated in FIGS. 1 to 4 is merely an example. The inhaler 100 can be implemented in various forms in which the rod 500 is held and applied with an action such as heating to generate a gas to which a flavor component is added from the rod 500, and the user can inhale the generated gas.

### <Internal Configuration of Non-combustion Inhaler>

An internal unit 140 of the inhaler 100 will be described with reference to FIGS. 5 to 8.

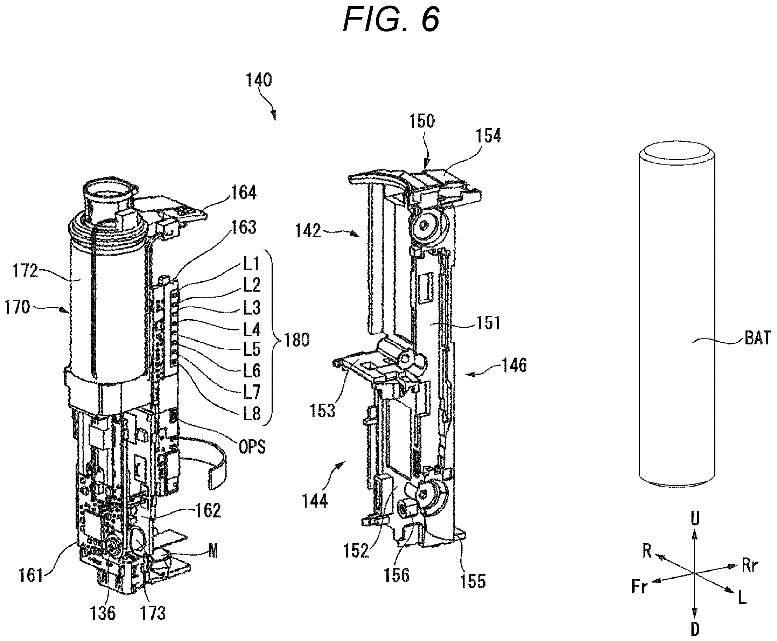

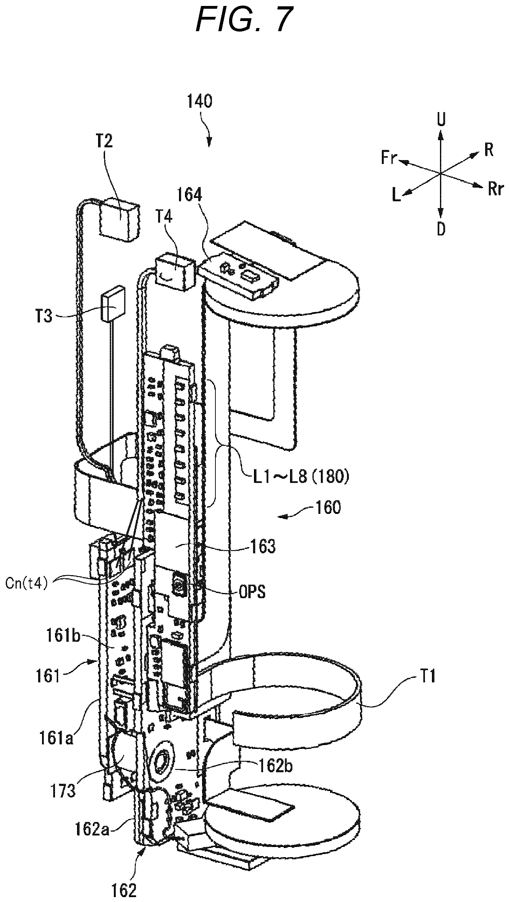

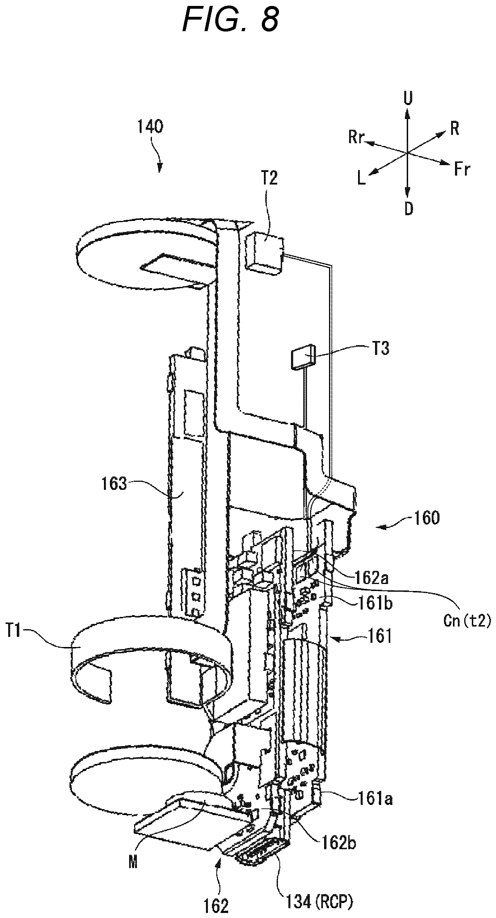

FIG. 5 is a perspective view of the internal unit 140 of the inhaler 100. FIG. 6 is an exploded perspective view of the internal unit 140 in FIG. 5. FIG. 7 is a perspective view of the internal unit 140 from which a power supply BAT and the chassis 150 are detached. FIG. 8 is another perspective view of the internal unit 140 from which the power supply BAT and the chassis 150 are detached.

The internal unit 140 accommodated in an internal space of the case 110 includes the chassis 150, the power supply BAT, a circuit unit 160, the heating unit 170, a notification unit 180, and various sensors.

The chassis 150 includes a plate-shaped chassis body 151 that is disposed substantially in a center of the internal space of the case 110 in the front-rear direction and that extends in the up-down direction and the front-rear direction, a plate-shaped front-rear partition wall 152 that is disposed substantially in a center of the internal space of the case 110 in the front-rear direction and that extends in the up-down direction and the left-right direction, a plate-shaped up-down partition wall 153 that extends forward from substantially a center of the front-rear partition wall 152 in the up-down direction, a plate-shaped chassis upper wall 154 that extends rearward from upper edge portions of the front-rear partition wall 152 and the chassis body 151, and a plate-shaped chassis lower wall 155 that extends rearward from lower edge portions of the front-rear partition wall 152 and the chassis body 151. A left surface of the chassis body 151 is covered with the inner panel 118 and the outer panel 115 of the case 110 described above.

By the chassis 150, a heating unit accommodating region 142 is defined and formed in a front upper portion of the internal space of the case 110, a board accommodating region 144 is defined and formed in a front lower portion thereof, and a power supply accommodating space 146 is defined and formed in a rear portion thereof in the up-down direction.

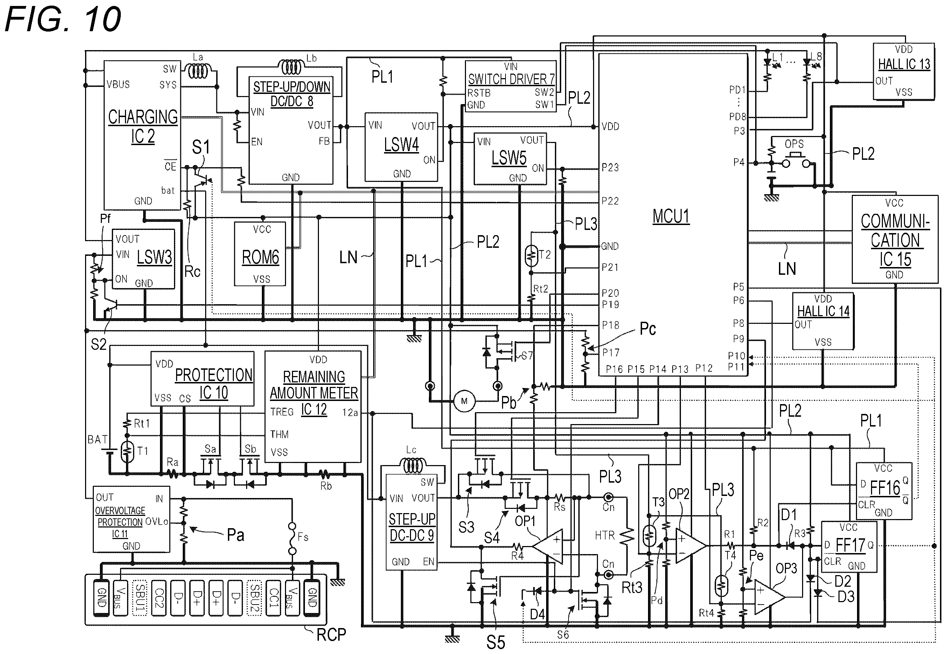

The heating unit 170 accommodated in the heating unit accommodating region 142 is constituted by a plurality of tubular members, and these tubular members are concentrically disposed to form a tubular body as a whole. The heating unit 170 includes a rod accommodating unit 172 capable of accommodating a portion of the rod 500 therein, and a heater HTR (see FIGS. 10 to 19) that heats the rod 500 from an outer circumference or a center of the rod 500. Preferably, a surface of the rod accommodating unit 172 is insulated from the heater HTR by forming the rod accommodating unit 172 from a heat-insulating material or providing a heat-insulating material inside the rod accommodating unit 172. The heater HTR may be any element capable of heating the rod 500. The heater HTR is, for example, a heating element. Examples of the heating element include a heating resistor, a ceramic heater, and an induction heating heater. As the heater HTR, for example, a heater having a PTC (Positive Temperature Coefficient) characteristic in which a resistance value increases with an increase in temperature is preferably used. Alternatively, a heater HTR having a NTC (Negative Temperature Coefficient) characteristic in which the resistance value decreases with an increase in temperature may be used. The heating unit 170 has a function of defining a flow path of air supplied to the rod 500 and a function of heating the rod 500. The case 110 is formed with a vent (not illustrated) that allows air to flow, and is configured to allow air to flow into the heating unit 170.

The power supply BAT accommodated in the power supply accommodating space 146 is a rechargeable secondary battery, an electric double layer capacitor, or the like, and is preferably a lithium-ion secondary battery. An electrolyte of the power supply BAT may be implemented by one or a combination of a gel electrolyte, an electrolytic solution, a solid electrolyte, and an ionic liquid.

The notification unit 180 notifies various kinds of information such as a SOC (State Of Charge) indicating a charging state of the power supply BAT, a preheating time at the time of inhaling, and an inhaling available period. The notification unit 180 according to the present embodiment includes the eight LEDs L1 to L8 and a vibration motor M. The notification unit 180 may be formed by light-emitting elements such as the LEDs L1 to L8, may be formed by vibration elements such as the vibration motor M, or may be formed by sound output elements. The notification unit 180 may be a combination of two or more elements among the light-emitting elements, the vibration elements, and the sound output elements.

The various sensors include an intake sensor that detects a puff operation (an inhaling operation) of the user, a power supply temperature sensor that detects a temperature of the power supply BAT, a heater temperature sensor that detects a temperature of the heater HTR, a case temperature sensor that detects a temperature of the case 110, a cover position sensor that detects a position of the slider 119, a panel detection sensor that detects attachment or detachment of the outer panel 115, and the like.

The intake sensor mainly includes, for example, a thermistor T2 disposed in the vicinity of the opening 132. The power supply temperature sensor mainly includes, for example, a thermistor T1 disposed in the vicinity of the power supply BAT. The heater temperature sensor mainly includes, for example, a thermistor T3 disposed in the vicinity of the heater HTR. As described above, the rod accommodating unit 172 is preferably insulated from the heater HTR. In this case, it is preferable that the thermistor T3 is in contact with or close to the heater HTR inside the rod accommodating unit 172. When the heater HTR has the PTC characteristic or the NTC characteristic, the heater HTR may be used for the heater temperature sensor. The case temperature sensor mainly includes, for example, a thermistor T4 disposed in the vicinity of a left surface of the case 110. The thermistor T4 is preferably in contact with or close to the case 110. The cover position sensor mainly includes a Hall IC 14 including a Hall element disposed in the vicinity of the slider 119. The panel detection sensor mainly includes a Hall IC 13 including a Hall element disposed in the vicinity of an inner surface of the inner panel 118.

The circuit unit 160 includes four circuit boards, a plurality of ICs (Integrated Circuits), and a plurality of elements. The four circuit boards include an MCU mounting board 161 on which a MCU (Micro Controller Unit) 1 and a charging IC 2 (to be described later) are disposed, a receptacle mounting board 162 on which the charging terminal 134 is mainly disposed, an LED mounting board 163 on which the operation switch OPS, LEDs L1 to L8, and a communication IC 15 to be described later are disposed, and a Hall IC mounting board 164 on which the Hall IC 14 (to be described later) including the Hall element constituting the cover position sensor is disposed.

The MCU mounting board 161 and the receptacle mounting board 162 are disposed in parallel to each other in the board accommodating region 144. Specifically, an element disposition surface of the MCU mounting board 161 and an element disposition surface of the receptacle mounting board 162 are disposed along the left-right direction and the up-down direction, respectively, and the MCU mounting board 161 is disposed in front of the receptacle mounting board 162. The MCU mounting board 161 and the receptacle mounting board 162 are each provided with openings. The MCU mounting board 161 and the receptacle mounting board 162 are fastened to a board fixing unit 156 of the front-rear partition wall 152 with bolts 136 in a state where a cylindrical spacer 173 is interposed between peripheral edge portions of the openings. That is, the spacer 173 fixes positions of the MCU mounting board 161 and the receptacle mounting board 162 inside the case 110, and mechanically connects the MCU mounting board 161 and the receptacle mounting board 162. Accordingly, the MCU mounting board 161 and the receptacle mounting board 162 come into contact with each other, and it is possible to prevent the occurrence of a short-circuit current therebetween.

For the sake of convenience, assuming that the surfaces of the MCU mounting board 161 and the receptacle mounting board 162 facing the front are main surfaces 161a and 162a, respectively, and surfaces opposite to the main surfaces 161a and 162a are secondary surfaces 161b and 162b, respectively, the secondary surface 161b of the MCU mounting board 161 and the main surface 162a of the receptacle mounting board 162 face each other with a predetermined gap therebetween. The main surface 161a of the MCU mounting board 161 faces the front surface of the case 110, and the secondary surface 162b of the receptacle mounting board 162 faces the front-rear partition wall 152 of the chassis 150. Elements and ICs mounted on the MCU mounting board 161 and the receptacle mounting board 162 will be described later.

The LED mounting board 163 is disposed on a left side surface of the chassis body 151 and between the two magnets 124 disposed vertically. An element disposition surface of the LED mounting board 163 is disposed along the up-down direction and the front-rear direction. In other words, the element disposition surfaces of the MCU mounting board 161 and the receptacle mounting board 162 are orthogonal to the element disposition surface of the LED mounting board 163. In this way, the element disposition surfaces of the MCU mounting board 161 and the receptacle mounting board 162 and the element disposition surface of the LED mounting board 163 are not limited to being orthogonal to each other, and preferably intersect (are not parallel to) each other. The LEDs L1 to L8 and the vibration motor M constituting the notification unit 180 are fixed to a lower surface of the chassis lower wall 155 and electrically connected to the MCU mounting board 161.

The Hall IC mounting board 164 is disposed on an upper surface of the chassis upper wall 154.

### <Operation Modes of Inhaler>

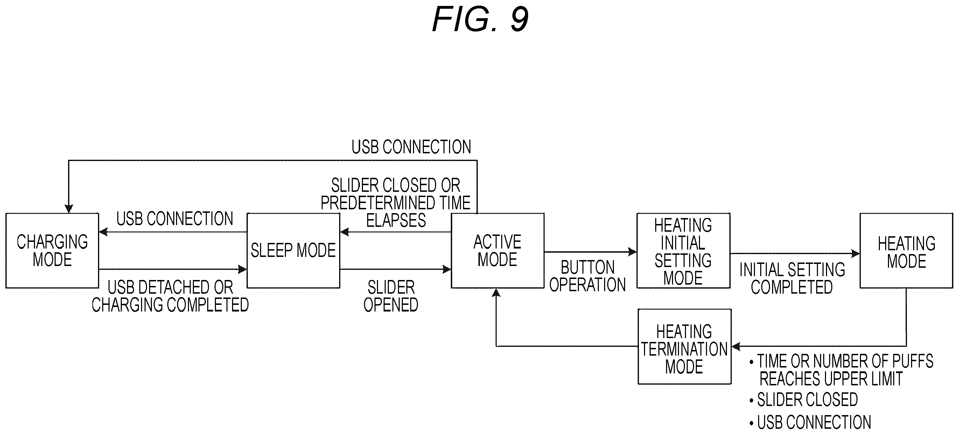

FIG. 9 is a schematic diagram illustrating operation modes of the inhaler 100. As illustrated in FIG. 9, the operation modes of the inhaler 100 include a charging mode, a sleep mode, an active mode, a heating initial setting mode, a heating mode, and a heating termination mode.

The sleep mode is a mode in which power supply to an electronic component mainly required for heating control of the heater HTR is stopped to save power.

The active mode is a mode in which most of the functions other than the heating control of the heater HTR are enabled. When the slider 119 is opened in a state where the inhaler 100 is operating in the sleep mode, the operation mode is switched to the active mode. When the slider 119 is closed or a non-operation time of the operation switch OPS reaches a predetermined time in a state where the inhaler 100 is operating in the active mode, the operation mode is switched to the sleep mode.

The heating initial setting mode is a mode in which an initial setting such as a control parameter for starting the heating control of the heater HTR is performed. When an operation of the operation switch OPS is detected in a state where the inhaler 100 is operating in the active mode, the operation mode is switched to the heating initial setting mode, and when the initial setting ends, the operation mode is switched to the heating mode.

The heating mode is a mode in which the heating control (heating control for aerosol generation and heating control for temperature detection) of the heater HTR is executed. When the operation mode is switched to the heating mode, the inhaler 100 starts the heating control of the heater HTR.

The heating termination mode is a mode in which a termination process (a storage process of heating history and the like) of the heating control of the heater HTR is executed. In a state where the inhaler 100 is operating in the heating mode, when an energization time to the heater HTR or the number of times of inhalation by the user reaches an upper limit or the slider 119 is closed, the operation mode is switched to the heating termination mode, and when the termination process ends, the operation mode is switched to the active mode. When USB connection is established in a state where the inhaler 100 is operating in the heating mode, the operation mode is switched to the heating termination mode, and when the termination process ends, the operation mode is switched to the charging mode. As illustrated in FIG. 9, in this case, the operation mode may be switched to the active mode before the operation mode is switched to the charging mode. In other words, when the USB connection is established in a state where the inhaler 100 is operating in the heating mode, the operation mode may be switched in the order of the heating termination mode, the active mode, and the charging mode.

The charging mode is a mode in which the power supply BAT is charged with power supplied from an external power supply connected to the receptacle RCP. When the external power supply is connected (USB connection) to the receptacle RCP in a state where the inhaler 100 is operating in the sleep mode or the active mode, the operation mode is switched to the charging mode. When the charging of the power supply BAT is completed or the connection between the receptacle RCP and the external power supply is released in a state where the inhaler 100 is operating in the charging mode, the operation mode is switched to the sleep mode.

### <Outline of Circuit of Internal Unit>

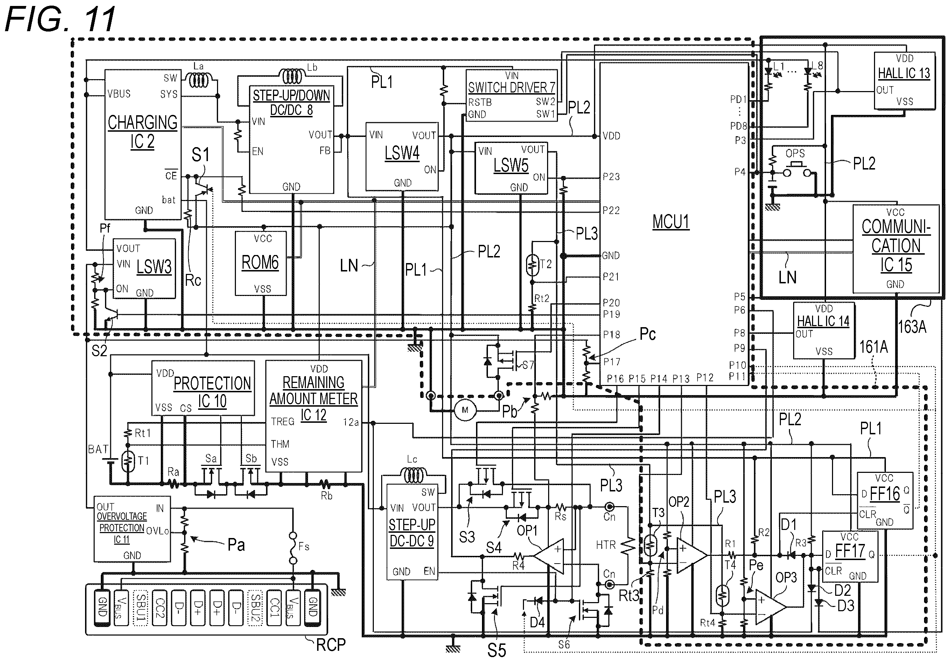

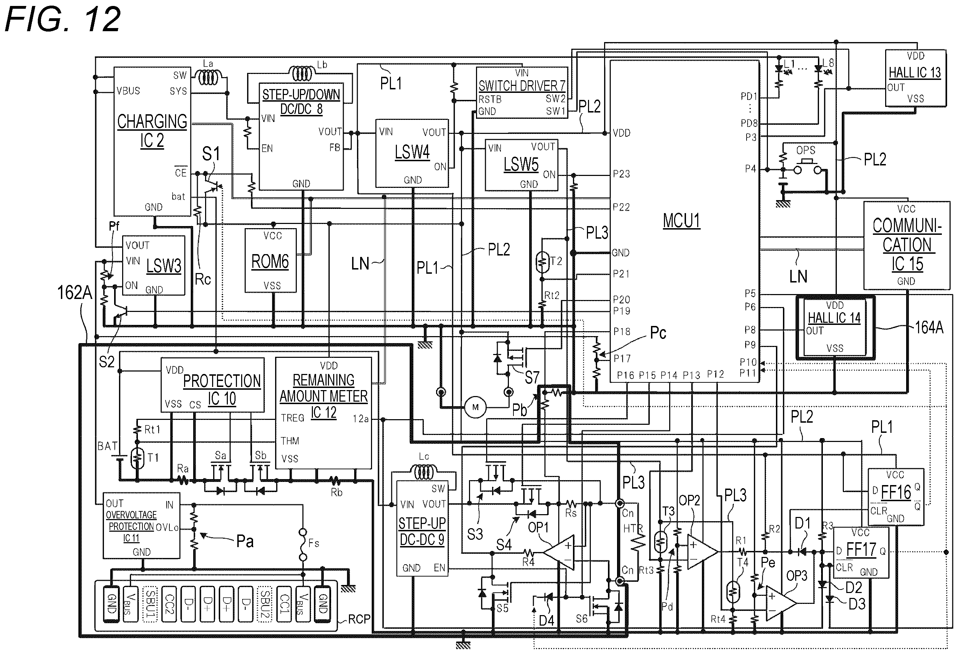

FIGS. 10, 11, and 12 are diagrams illustrating a schematic configuration of an electric circuit of the internal unit 140. FIG. 11 is the same as FIG. 10 except that a range 161A (a range surrounded by a thick broken line) mounted on the MCU mounting board 161 and a range 163A (a range surrounded by a thick solid line) mounted on the LED mounting board 163 are added in the electric circuit illustrated in FIG. 10. FIG. 12 is the same as FIG. 10 except that a range 162A mounted on the receptacle mounting board 162 and a range 164A mounted on the Hall IC mounting board 164 are added in the electric circuit illustrated in FIG. 10.

A wiring indicated by a thick solid line in FIG. 10 is a wiring having the same potential as a reference potential (a ground potential) of the internal unit 140 (a wiring connected to a ground provided in the internal unit 140), and this wiring is hereinafter referred to as a ground line. In FIG. 10, an electronic component in which a plurality of circuit elements are chipped is indicated by a rectangle, and symbols of various terminals are written inside the rectangle. Power supply terminals VCC and power supply terminals VDD mounted on the chips indicate power supply terminals on a high-potential side. Power supply terminals VSS and ground terminals GND mounted on the chips indicate power supply terminals on a low-potential side (a reference potential side). In the chipped electronic component, a power supply voltage is a difference between a potential of the power supply terminal on the high-potential side and a potential of the power supply terminal on the low-potential side. The chipped electronic component uses the power supply voltage to execute various functions.

As illustrated in FIG. 11, the MCU mounting board 161 (a range 161A) is provided with, as main electronic components, the MCU 1 that integrally controls the entire inhaler 100, the charging IC 2 that executes charging control of the power supply BAT, load switches (hereinafter, referred to as LSW) 3, 4, and 5 each formed by combining a capacitor, a resistor, a transistor, and the like, a ROM (Read Only Memory) 6, a switch driver 7, a step-up/down DC/DC converter 8 (illustrated as a step-up/down DC/DC 8 in the drawing), an operational amplifier OP2, an operational amplifier OP3, flip-flops (hereinafter, FF) 16 and 17, a connector Cn (t2) (illustrated as the thermistor T2 connected to the connector in the drawing) electrically connected to the thermistor T2 constituting the intake sensor, a connector Cn (t3) (illustrated as the thermistor T3 connected to the connector in the drawing) electrically connected to the thermistor T3 constituting the heater temperature sensor, a connector Cn (t4) (illustrated as the thermistor T4 connected to the connector in the drawing) electrically connected to the thermistor T4 constituting the case temperature sensor, and a voltage dividing circuit Pc for USB connection detection.

The ground terminal GND of each of the charging IC 2, LSW3, LSW4, LSW5, the switch driver 7, the step-up/down DC/DC converter 8, the FF 16, and the FF 17 is connected to the ground line. The power supply terminal VSS of the ROM 6 is connected to the ground line. Negative power supply terminals of the operational amplifier OP2 and the operational amplifier OP3 are connected to the ground line.

As illustrated in FIG. 11, the LED mounting board 163 (a range 163A) is provided with, as main electronic components, the Hall IC 13 including the Hall element constituting the panel detection sensor, the LEDs L1 to L8, the operation switch OPS, and the communication IC 15. The communication IC 15 is a communication module for communicating with an electronic device such as a smartphone. The power supply terminal VSS of the Hall IC 13 and the ground terminal GND of the communication IC 15 are connected to the ground line. The communication IC 15 and the MCU 1 are capable of communicating with each other via a communication line LN. One end of the operation switch OPS is connected to the ground line, and the other end of the operation switch OPS is connected to a terminal P4 of the MCU 1.

As illustrated in FIG. 12, the receptacle mounting board 162 (a range 162A) is provided with, as main electronic components, a power supply connector (illustrated as the power supply BAT connected to the power supply connector in the drawing) electrically connected to the power supply BAT, a connector (illustrated as the thermistor T1 connected to the connector in the drawing) electrically connected to the thermistor T1 constituting the power supply temperature sensor, a step-up DC/DC converter 9 (illustrated as a step-up DC/DC 9 in the drawing), a protection IC 10, an overvoltage protection IC 11, a remaining amount meter IC 12, the receptacle RCP, switches S3 to S6 formed of MOSFETs, an operational amplifier OP1, and a pair of heater connectors Cn (a positive electrode side and a negative electrode side) electrically connected to the heater HTR.

The two ground terminals GND of the receptacle RCP, the ground terminal GND of the step-up DC/DC converter 9, the power supply terminal VSS of the protection IC 10, the power supply terminal VSS of the remaining amount meter IC 12, the ground terminal GND of the overvoltage protection IC 11, and a negative power supply terminal of the operational amplifier OP1 are connected to the ground line.

As illustrated in FIG. 12, the Hall IC mounting board 164 (a range 164A) is provided with the Hall IC 14 including the Hall element constituting the cover position sensor. The power supply terminal VSS of the Hall IC 14 is connected to the ground line. An output terminal OUT of the Hall IC 14 is connected to a terminal P8 of the MCU 1. The MCU 1 detects the opening and closing of the slider 119 based on a signal input to the terminal P8.

As illustrated in FIG. 11, a connector electrically connected to the vibration motor M is provided on the MCU mounting board 161.

### <Details of Circuit of Internal Unit>

Connection relation between the electronic components and the like will be described below with reference to FIG. 10.

Each of two power supply input terminals V_{BUS} of the receptacle RCP is connected to an input terminal IN of the overvoltage protection IC 11 via a fuse Fs. When a USB plug is connected to the receptacle RCP and a USB cable including the USB plug is connected to the external power supply, a USB voltage V_{USB} is supplied to the two power supply input terminals V_{BUS} of the receptacle RCP.

One end of a voltage dividing circuit Pa including a series circuit of two resistors is connected to the input terminal IN of the overvoltage protection IC 11. The other end of the voltage dividing circuit Pa is connected to the ground line. A connection point of the two resistors constituting the voltage dividing circuit Pa is connected to a voltage detection terminal O VLo of the overvoltage protection IC 11. In a state where a voltage input to the voltage detection terminal OVLo is less than a threshold, the overvoltage protection IC 11 outputs a voltage input to the input terminal IN from the output terminal OUT. When the voltage input to the voltage detection terminal OVLo is equal to or higher than the threshold (overvoltage), the overvoltage protection IC 11 stops the voltage output from the output terminal OUT (disconnects electrical connection between the LSW3 and the receptacle RCP), so that the electronic components downstream of the overvoltage protection IC 11 are protected. The output terminal OUT of the overvoltage protection IC 11 is connected to an input terminal VIN of the LSW3 and one end of the voltage dividing circuit Pc (a series circuit of two resistors) connected to the MCU 1. The other end of the voltage dividing circuit Pc is connected to the ground line. A connection point of the two resistors constituting the voltage dividing circuit Pc is connected to a terminal P17 of the MCU 1.

One end of a voltage dividing circuit Pf including a series circuit of two resistors is connected to the input terminal VIN of the LSW3. The other end of the voltage dividing circuit Pf is connected to the ground line. A connection point of the two resistors constituting the voltage dividing circuit Pf is connected to a control terminal ON of the LSW3. A collector terminal of a bipolar transistor S2 is connected to the control terminal ON of the LSW3. An emitter terminal of the bipolar transistor S2 is connected to the ground line. A base terminal of the bipolar transistor S2 is connected to a terminal P19 of the MCU 1. When a signal input to the control terminal ON is at a high level, the LSW3 outputs, from an output terminal VOUT, a voltage input to the input terminal VIN. The output terminal VOUT of the LSW3 is connected to an input terminal VBUS of the charging IC 2. While the USB connection is not established, the MCU 1 turns on the bipolar transistor S2. Accordingly, since the control terminal ON of the LSW3 is connected to the ground line via the bipolar transistor S2, a low-level signal is input to the control terminal ON of the LSW3.

When the USB connection is established, the MCU 1 turns off the bipolar transistor S2 connected to the LSW3. When the bipolar transistor S2 is turned off, the USB voltage V_{USB} obtained by dividing the voltage by the voltage dividing circuit Pf is input to the control terminal ON of the LSW3. Therefore, when the USB connection is established and the bipolar transistor S2 is turned off, a high-level signal is input to the control terminal ON of the LSW3. Accordingly, the LSW3 outputs, from the output terminal VOUT, the USB voltage V_{USB} supplied from the USB cable. Even when the USB connection is established in a state where the bipolar transistor S2 is not turned off, the control terminal ON of the LSW3 is connected to the ground line via the bipolar transistor S2. Therefore, unless the MCU 1 turns off the bipolar transistor S2, a low-level signal is continuously input to the control terminal ON of the LSW3.

A positive electrode terminal of the power supply BAT is connected to the power supply terminal VDD of the protection IC 10, the input terminal VIN of the step-up DC/DC converter 9, and a charging terminal bat of the charging IC 2. Therefore, a power supply voltage V_{BAT} of the power supply BAT is supplied to the protection IC 10, the charging IC 2, and the step-up DC/DC converter 9. A resistor Ra, a switch Sa formed of a MOSFET, a switch Sb formed of a MOSFET, and a resistor Rb are connected in series in this order to a negative electrode terminal of the power supply BAT. A current detection terminal CS of the protection IC 10 is connected to a connection point of the resistor Ra and the switch Sa. Control terminals of the switches Sa and Sb are connected to the protection IC 10. Both ends of the resistor Rb are connected to the remaining amount meter IC 12.

The protection IC 10 acquires a value of a current flowing through the resistor Ra during charging and discharging of the power supply BAT from a voltage input to the current detection terminal CS. When the value of the current becomes excessive (overcurrent), the protection IC 10 controls opening and closing of the switch Sa and the switch Sb to stop charging or discharging the power supply BAT, thereby protecting the power supply BAT. More specifically, when the excessive value of the current is acquired during charging of the power supply BAT, the protection IC 10 turns off the switch Sb to stop charging the power supply BAT. When the excessive value of the current is acquired during discharging of the power supply BAT, the protection IC 10 turns off the switch Sa to stop discharging the power supply BAT. When a voltage value of the power supply BAT is abnormal (overcharge or overvoltage) from the voltage input to the power supply terminal VDD, the protection IC 10 controls opening and closing of the switch Sa and the switch Sb to stop charging or discharging the power supply BAT, thereby protecting the power supply BAT. More specifically, when overcharge of the power supply BAT is detected, the protection IC 10 turns off the switch Sb to stop charging the power supply BAT. When over-discharge of the power supply BAT is detected, the protection IC 10 turns off the switch Sa to stop discharging the power supply BAT.

A resistor Rt1 is connected to a connector connected to the thermistor T1 disposed in the vicinity of the power supply BAT. A series circuit of the resistor Rt1 and the thermistor T1 is connected to the ground line and a regulator terminal TREG of the remaining amount meter IC 12. A connection point of the thermistor T1 and the resistor Rt1 is connected to a thermistor terminal THM of the remaining amount meter IC 12. The thermistor T1 may be a PTC (Positive Temperature Coefficient) thermistor whose resistance value increases as a temperature increases, or may be a NTC (Negative Temperature Coefficient) thermistor whose resistance value decreases as the temperature increases.

The remaining amount meter IC 12 detects a current flowing through the resistor Rb, and derives battery information such as a remaining capacity of the power supply BAT, a SOC (State Of Charge) indicating a charging state, and a SOH (State Of Health) indicating a sound state, based on the detected value of the current. The remaining amount meter IC 12 supplies a voltage from a built-in regulator connected to the regulator terminal TREG to a voltage dividing circuit of the thermistor T1 and the resistor Rt1. The remaining amount meter IC 12 acquires a voltage divided by the voltage dividing circuit from the thermistor terminal THM, and acquires temperature information relating to the temperature of the power supply BAT based on the voltage. The remaining amount meter IC 12 is connected to the MCU 1 via the communication line LN for serial communication, and is capable of communicating with the MCU 1. The remaining amount meter IC 12 transmits the derived battery information and the acquired temperature information of the power supply BAT to the MCU 1 in response to a request from the MCU 1. In order to perform serial communication, a plurality of signal lines such as a data line for data transmission and a clock line for synchronization are required. In FIGS. 10 to 19, for simplification, only one signal line is illustrated.

The remaining amount meter IC 12 includes a notification terminal 12a. The notification terminal 12a is connected to a terminal P6 of the MCU 1 and a cathode of a diode D2 to be described later. When an abnormality such as an excessively high-temperature of the power supply BAT is detected, the remaining amount meter IC 12 outputs a low-level signal from the notification terminal 12a to notify the MCU 1 of the occurrence of the abnormality. The low-level signal is also input to a CLR (⁻) terminal of the FF 17 via the diode D2.

One end of a reactor Lc is connected to a switching terminal SW of the step-up DC/DC converter 9. The other end of the reactor Lc is connected to the input terminal VIN of the step-up DC/DC converter 9. The step-up DC/DC converter 9 executes on/off control of a built-in transistor connected to the switching terminal SW to step up the input voltage and output the voltage from the output terminal VOUT. The input terminal VIN of the step-up DC/DC converter 9 constitutes a power supply terminal on the high-potential side of the step-up DC/DC converter 9. The step-up DC/DC converter 9 performs a step-up operation when a signal input to an enable terminal EN is at a high level. In a USB-connected state, the signal input to the enable terminal EN of the step-up DC/DC converter 9 may be controlled to be low level by the MCU 1. Alternatively, in the USB-connected state, the MCU 1 does not control the signal input to the enable terminal EN of the step-up DC/DC converter 9, so that a potential of the enable terminal EN may be indefinite.

A source terminal of a switch S4 formed of a P-channel MOSFET is connected to the output terminal VOUT of the step-up DC/DC converter 9. A gate terminal of the switch S4 is connected to a terminal P 15 of the MCU 1. One end of the resistor Rs is connected to a drain terminal of the switch S4. The other end of the resistor Rs is connected to the heater connector Cn on the positive electrode side connected to one end of the heater HTR. A connection point of the switch S4 and the resistor Rs is connected to a voltage dividing circuit Pb including two resistors. A connection point of the two resistors constituting the voltage dividing circuit Pb is connected to a terminal P18 of the MCU 1. The connection point of the switch S4 and the resistor Rs is further connected to a positive power supply terminal of the operational amplifier OP1.

A source terminal of the switch S3 formed of a P-channel MOSFET is connected to a connection line between the output terminal VOUT of the step-up DC/DC converter 9 and the source terminal of the switch S4. A gate terminal of the switch S3 is connected to a terminal P16 of the MCU 1. A drain terminal of the switch S3 is connected to a connection line between the resistor Rs and the heater connector Cn on the positive electrode side. Therefore, a circuit including the switch S3 and a circuit including the switch S4 and the resistor Rs are connected in parallel between the output terminal VOUT of the step-up DC/DC converter 9 and the positive electrode side of the heater connector Cn. Since the circuit including the switch S3 does not include a resistor, the circuit is a circuit having a lower resistance than the circuit including the switch S4 and the resistor Rs.

A non-inverting input terminal of the operational amplifier OP1 is connected to a connection line between the resistor Rs and the heater connector Cn on the positive electrode side. An inverting input terminal of the operational amplifier OP 1 is connected to the heater connector Cn on the negative electrode side connected to the other end of the heater HTR and a drain terminal of the switch S6 formed of an N-channel MOSFET. A source terminal of the switch S6 is connected to the ground line. A gate terminal of the switch S6 is connected to a terminal P14 of the MCU 1, an anode of the diode D4, and the enable terminal EN of the step-up DC/DC converter 9. A cathode of the diode D4 is connected to a Q terminal of the FF 17. One end of a resistor R4 is connected to an output terminal of the operational amplifier OP1. The other end of the resistor R4 is connected to a terminal P9 of the MCU 1 and a drain terminal of the switch S5 formed of the N-channel MOSFET. A source terminal of the switch S5 is connected to the ground line. A gate terminal of the switch S5 is connected to the connection line between the resistor Rs and the heater connector Cn on the positive electrode side.

The input terminal VBUS of the charging IC 2 is connected to an anode of each of the LEDs L1 to L8. Cathodes of the LEDs L1 to L8 are connected to control terminals PD1 to PD8 of the MCU 1 via resistors for current limitation, respectively. That is, the LEDs L1 to L8 are connected in parallel to the input terminal VBUS. The LEDs L1 to L8 are operable by the USB voltage V_{USB} supplied from the USB cable connected to the receptacle RCP and a voltage supplied from the power supply BAT through the charging IC 2. Transistors (switching elements) connected to the control terminals PD1 to PD8 and the ground terminal GND are built in the MCU 1. The MCU 1 turns on the transistor connected to the control terminal PD1 to energize the LED L1 to turn on the LED L1, and turns off the transistor connected to the control terminal PD1 to turn off the LED L1. By switching on and off the transistor connected to the control terminal PD1 at high speed, luminance and a light emission pattern of the LED L1 can be dynamically controlled. Similarly, lighting of the LEDs L2 to L8 is controlled by the MCU 1.

The charging IC 2 has a charging function of charging the power supply BAT based on the USB voltage V_{USB} input to the input terminal VBUS. The charging IC 2 acquires a charging current and a charging voltage of the power supply BAT from a terminal or wiring (not illustrated), and executes charging control of the power supply BAT (a power supply control from the charging terminal bat to the power supply BAT) based on the acquired charging current and charging voltage. The charging IC 2 may acquire the temperature information of the power supply BAT transmitted from the remaining amount meter IC 12 to the MCU 1 from the MCU 1 through serial communication using the communication line LN, and use the acquired temperature information for charging control.

The charging IC 2 further has a V_{BAT} power pass function and an OTG function. The V_{BAT} power pass function is a function of outputting, from an output terminal SYS, a system power supply voltage Vcc0 that substantially coincides with the power supply voltage V_{BAT} input to the charging terminal bat. The OTG function is a function of outputting, from the input terminal VBUS, a system power supply voltage Vcc4 obtained by stepping up the power supply voltage V_{BAT} input to the charging terminal bat. The on/off of the OTG function of the charging IC 2 is controlled by the MCU 1 through the serial communication using the communication line LN. In the OTG function, the power supply voltage V_{BAT} input to the charging terminal bat may be directly output from the input terminal VBUS. In this case, the power supply voltage V_{BAT} and the system power supply voltage Vcc4 substantially coincide with each other.

The output terminal SYS of the charging IC 2 is connected to the input terminal VIN of the step-up/down DC/DC converter 8. One end of a reactor La is connected to the switching terminal SW of the charging IC 2. The other end of the reactor La is connected to the output terminal SYS of the charging IC 2. A charge enable terminal CE (⁻) of the charging IC 2 is connected to a terminal P22 of the MCU 1 via a resistor. Further, the collector terminal of the bipolar transistor S1 is connected to the charge enable terminal CE (⁻) of the charging IC 2. The emitter terminal of the bipolar transistor S1 is connected to the output terminal VOUT of the LSW4 to be described later. A base terminal of the bipolar transistor S1 is connected to the Q terminal of the FF 17. Further, one end of the resistor Rc is connected to the charge enable terminal CE (⁻) of the charging IC 2. The other end of the resistor Rc is connected to the output terminal VOUT of the LSW4.

A resistor is connected to the input terminal VIN and the enable terminal EN of the step-up/down DC/DC converter 8. When the system power supply voltage Vcc0 is input from the output terminal SYS of the charging IC 2 to the input terminal VIN of the step-up/down DC/DC converter 8, a signal input to the enable terminal EN of the step-up/down DC/DC converter 8 becomes high level, and the step-up/down DC/DC converter 8 starts a step-up operation or a step-down operation. The step-up/down DC/DC converter 8 steps up or steps down the system power supply voltage Vcc0 input to the input terminal VIN by switching control of a built-in transistor connected to a reactor Lb to generate a system power supply voltage Vcc1, and outputs the system power supply voltage Vcc1 from the output terminal VOUT. The output terminal VOUT of the step-up/down DC/DC converter 8 is connected to a feedback terminal FB of the step-up/down DC/DC converter 8, the input terminal VIN of the LSW4, the input terminal VIN of the switch driver 7, and the power supply terminal VCC and a D terminal of the FF 16. A wiring to which the system power supply voltage Vcc1 outputted from the output terminal VOUT of the step-up/down DC/DC converter 8 is supplied is referred to as a power supply line PL1.

When the signal input to the control terminal ON is at a high level, the LSW4 outputs, from the output terminal VOUT, the system power supply voltage Vcc1 input to the input terminal VIN. The control terminal ON of the LSW4 and the power supply line PL1 are connected via a resistor. Therefore, when the system power supply voltage Vcc1 is supplied to the power supply line PL1, a high-level signal is input to the control terminal ON of the LSW4. A voltage output from the LSW4 is the same as the system power supply voltage Vcc1 if wiring resistance and the like are ignored., but in order to distinguish from system power supply voltage Vcc 1, a voltage output from output terminal VOUT of the LSW4 is hereinafter referred to as system power supply voltage Vcc2.

The output terminal VOUT of the LSW4 is connected to the power supply terminal VDD of the MCU 1, the input terminal VIN of the LSW5, the power supply terminal VDD of the remaining amount meter IC 12, the power supply terminal VCC of the ROM 6, the emitter terminal of the bipolar transistor S1, the resistor Rc, and the power supply terminal VCC of the FF 17. A wiring to which the system power supply voltage Vcc2 output from the output terminal VOUT of the LSW4 is supplied is referred to as a power supply line PL2.

When the signal input to the control terminal ON is at a high level, the LSW5 outputs, from the output terminal VOUT, the system power supply voltage Vcc2 input to the input terminal VIN. The control terminal ON of the LSW5 is connected to a terminal P23 of the MCU 1. A voltage output from the LSW5 is the same as the system power supply voltage Vcc2 if wiring resistance and the like are ignored, but in order to distinguish from system power supply voltage Vcc2, a voltage output from output terminal VOUT of the LSW5 is hereinafter referred to as system power supply voltage Vcc3. A wiring to which the system power supply voltage Vcc3 output from the output terminal VOUT of the LSW5 is supplied is referred to as a power supply line PL3.

A series circuit of the thermistor T2 and the resistor Rt2 is connected to the power supply line PL3, and the resistor Rt2 is connected to the ground line. The thermistor T2 and the resistor Rt2 constitute a voltage dividing circuit, and a connection point of the thermistor T2 and the resistor Rt2 is connected to a terminal P21 of the MCU 1. The MCU 1 detects a temperature fluctuation (a resistance value fluctuation) of the thermistor T2 based on a voltage input to the terminal P21, and determines the presence or absence of the puff operation based on a temperature fluctuation amount.

A series circuit of the thermistor T3 and the resistor Rt3 is connected to the power supply line PL3, and the resistor Rt3 is connected to the ground line. The thermistor T3 and the resistor Rt3 constitute a voltage dividing circuit, and a connection point of the thermistor T3 and the resistor Rt3 is connected to a terminal P13 of the MCU 1 and an inverting input terminal of the operational amplifier OP2. The MCU 1 detects a temperature of the thermistor T3 (corresponding to the temperature of the heater HTR) based on a voltage input to the terminal P13.

A series circuit of the thermistor T4 and the resistor Rt4 is connected to the power supply line PL3, and the resistor Rt4 is connected to the ground line. The thermistor T4 and the resistor Rt4 constitute a voltage dividing circuit, and a connection point of the thermistor T4 and the resistor Rt4 is connected to a terminal P12 of the MCU 1 and an inverting input terminal of the operational amplifier OP3. The MCU 1 detects a temperature of the thermistor T4 (corresponding to the temperature of the case 110) based on a voltage input to the terminal P12.

A source terminal of a switch S7 formed of a MOSFET is connected to the power supply line PL2. A gate terminal of the switch S7 is connected to a terminal P20 of the MCU 1. A drain terminal of the switch S7 is connected to one of a pair of connectors to which the vibration motor M is connected. The other of the pair of connectors is connected to the ground line. The MCU 1 can control opening and closing of the switch S7 by manipulating a potential of the terminal P20, and vibrate the vibration motor M in a specific pattern. A dedicated driver IC may be used instead of the switch S7.

The power supply line PL2 is connected to a positive power supply terminal of the operational amplifier OP2, and a voltage dividing circuit Pd (a series circuit of two resistors) connected to a non-inverting input terminal of the operational amplifier OP2. A connection point of the two resistors constituting the voltage dividing circuit Pd is connected to the non-inverting input terminal of the operational amplifier OP2. The operational amplifier OP2 outputs a signal corresponding to the temperature of the heater HTR (a signal corresponding to a resistance value of the thermistor T3). In the present embodiment, since the thermistor T3 having the NTC characteristic is used, the higher the temperature of the heater HTR (a temperature of the thermistor T3), the lower an output voltage of the operational amplifier OP2. This is because a negative power supply terminal of the operational amplifier OP2 is connected to the ground line, and a value of the output voltage of the operational amplifier OP2 is substantially equal to a value of the ground potential when a voltage value (a divided voltage value of the thermistor T3 and the resistor Rt3) input to the inverting input terminal of the operational amplifier OP2 is higher than a voltage value (a divided voltage value of the voltage dividing circuit Pd) input to the non-inverting input terminal of the operational amplifier OP2. That is, when the temperature of the heater HTR (the temperature of the thermistor T3) is high, the output voltage of the operational amplifier OP2 is at a low level.

In the case of using the thermistor T3 having the PTC characteristic, an output of a voltage dividing circuit of the thermistor T3 and the resistor Rt3 may be connected to the non-inverting input terminal of the operational amplifier OP2, and an output of the voltage dividing circuit Pd may be connected to the inverting input terminal of the operational amplifier OP2.

The power supply line PL2 is connected to a positive power supply terminal of an operational amplifier OP3, and a voltage dividing circuit Pe (a series circuit of two resistors) connected to a non-inverting input terminal of the operational amplifier OP3. A connection point of the two resistors constituting the voltage dividing circuit Pe is connected to the non-inverting input terminal of the operational amplifier OP3. The operational amplifier OP3 outputs a signal corresponding to the temperature of the case 110 (a signal corresponding to a resistance value of the thermistor T4). In the present embodiment, since the thermistor T4 having the NTC characteristic is used, the higher the temperature of the case 110, the lower an output voltage of the operational amplifier OP3. This is because a negative power supply terminal of the operational amplifier OP3 is connected to the ground line, and a value of the output voltage of the operational amplifier OP3 is substantially equal to a value of the ground potential when a voltage value (a divided voltage value of the thermistor T4 and the resistor Rt4) input to the inverting input terminal of the operational amplifier OP3 is higher than a voltage value (a divided voltage value of the voltage dividing circuit Pe) input to the non-inverting input terminal of the operational amplifier OP3. That is, when the temperature of the thermistor T4 is high, the output voltage of the operational amplifier OP3 is at a low level.

In the case of using the thermistor T4 having the PTC characteristic, an output of a voltage dividing circuit of the thermistor T4 and the resistor Rt4 may be connected to the non-inverting input terminal of the operational amplifier OP3, and an output of the voltage dividing circuit Pe may be connected to the inverting input terminal of the operational amplifier OP3.

A resistor R1 is connected to an output terminal of the operational amplifier OP2. A cathode of the diode D1 is connected to the resistor R1. An anode of the diode D1 is connected to an output terminal of the operational amplifier OP3, a terminal D of the FF 17, and the CLR (⁻) terminal of the FF 17. A resistor R2 connected to the power supply line PL 1 is connected to a connection line between the resistor R1 and the diode D1. A CLR (⁻) terminal of the FF 16 is connected to the connection line.

One end of the resistor R3 is connected to a connection line between a connection point of the anode of the diode D 1 and the output terminal of the operational amplifier OP3 and the D terminal of the FF 17. The other end of the resistor R3 is connected to the power supply line PL2. Further, an anode of the diode D2 connected to the notification terminal 12a of the remaining amount meter IC 12, an anode of the diode D3, and the CLR (⁻) terminal of the FF 17 are connected to the connection line. A cathode of the diode D3 is connected to a terminal P5 of the MCU 1.

When the temperature of the heater HTR is excessively high, a signal output from the operational amplifier OP2 is small, and a signal input to the CLR (⁻) terminal is at a low level, the FF 16 inputs a high-level signal from a Q (⁻) terminal to a terminal P11 of the MCU 1. The high-level system power supply voltage Vcc1 is supplied from the power supply line PL1 to the D terminal of the FF 16. Therefore, the FF 16 continues to output a low-level signal from the Q (⁻) terminal as long as the signal input to the CLR (⁻) terminal operating in a negative logic is not at a low level.

The signal input to the CLR (⁻) terminal of the FF 17 is at a low level in either case where the temperature of the heater HTR is excessively high, a case where the temperature of the case 110 is excessively high, or a case where a low-level signal indicating abnormality detection is output from the notification terminal 12a of the remaining amount meter IC 12. When the signal input to the CLR (⁻) terminal is at a low level, the FF 17 outputs the low-level signal from the Q terminal. The low-level signal is input to a terminal P10 of the MCU 1, the gate terminal of the switch S6, the enable terminal EN of the step-up DC/DC converter 9, and the base terminal of the bipolar transistor S1 connected to the charging IC 2. When the low-level signal is input to the gate terminal of the switch S6, a gate-source voltage of the N-channel MOSFET constituting the switch S6 is lower than a threshold voltage, so that the switch S6 is turned off. When the low-level signal is input to the enable terminal EN of the step-up DC/DC converter 9, the enable terminal EN of the step-up DC/DC converter 9 has a positive logic, and thus the step-up operation is stopped. When the low-level signal is input to the base terminal of the bipolar transistor S1, the bipolar transistor S1 is turned on (current amplified from the collector terminal is output). When the bipolar transistor S1 is turned on, the high-level system power supply voltage Vcc2 is input to the CE (⁻) terminal of the charging IC 2 via the bipolar transistor S1. Since the CE (⁻) terminal of the charging IC 2 has a negative logic, the charging of the power supply BAT is stopped. Thus, heating of the heater HTR and the charging of the power supply BAT are stopped. Even when the MCU 1 outputs a low-level enable signal from the terminal P22 to the charge enable terminal CE (⁻) of the charging IC 2, when the bipolar transistor S1 is turned on, the amplified current is input from the collector terminal to the terminal P22 of the MCU 1 and the charge enable terminal CE (⁻) of the charging IC 2. Accordingly, a high-level signal is input to the charge enable terminal CE (⁻) of the charging IC 2.

The high-level system power supply voltage Vcc2 is supplied from the power supply line PL2 to the D terminal of the FF 17. Therefore, the FF 17 continues to output a high-level signal from the Q terminal as long as the signal input to the CLR (⁻) terminal operating in a negative logic is not at a low level. When a low-level signal is output from the output terminal of the operational amplifier OP3, the low-level signal is input to the CLR (⁻) terminal of the FF 17 regardless of a level of the signal output from the output terminal of the operational amplifier OP2. When a high-level signal is output from the output terminal of the operational amplifier OP2, the low-level signal output from the output terminal of the operational amplifier OP3 is not influenced by the high-level signal due to the diode D1. When a low-level signal is output from the output terminal of the operational amplifier OP2, even when a high-level signal is output from the output terminal of the operational amplifier OP3, the high-level signal is replaced with the low-level signal via the diode D1.

The power supply line PL2 is further branched from the MCU mounting board 161 toward the LED mounting board 163 and the Hall IC mounting board 164. The power supply terminal VDD of the Hall IC 13, the power supply terminal VCC of the communication IC 15, and the power supply terminal VDD of the Hall IC 14 are connected to the branched power supply line PL2.

The output terminal OUT of the Hall IC 13 is connected to a terminal P3 of the MCU 1 and a terminal SW2 of the switch driver 7. When the outer panel 115 is detached, a low-level signal is output from the output terminal OUT of the Hall IC 13. The MCU 1 determines whether the outer panel 115 is attached based on a signal input to the terminal P3.

The LED mounting board 163 is provided with a series circuit (a series circuit of a resistor and a capacitor) connected to the operation switch OPS. The series circuit is connected to the power supply line PL2. A connection point of the resistor and the capacitor of the series circuit is connected to the terminal P4 of the MCU 1, the operation switch OPS, and a terminal SW1 of the switch driver 7. In a state where the operation switch OPS is not pressed, the operation switch OPS is not conductive, and signals input to the terminal P4 of the MCU 1 and the terminal SW1 of the switch driver 7 are at a high level due to the system power supply voltage Vcc2. When the operation switch OPS is pressed and the operation switch OPS is in a conductive state, the signals input to the terminal P4 of the MCU 1 and the terminal SW1 of the switch driver 7 are connected to the ground line, and thus the signals are at a low level. The MCU 1 detects the operation of the operation switch OPS based on the signal input to the terminal P4.

The switch driver 7 is provided with a reset input terminal RSTB. The reset input terminal RSTB is connected to the control terminal ON of the LSW4. When levels of the signals input to the terminal SW1 and the terminal SW2 are both at a low level (a state where the outer panel 115 is detached and the operation switch OPS is pressed), the switch driver 7 stops an output operation of the LSW 4 by outputting a low-level signal from the reset input terminal RSTB. That is, when the operation switch OPS, which is originally pressed down via the pressing portion 117 of the outer panel 115, is directly pressed down by the user in a state where the outer panel 115 is detached, the levels of the signals input to the terminal SW1 and the terminal SW2 of the switch driver 7 are both at a low level.

### <Operation for Each Operation Mode of Inhaler>

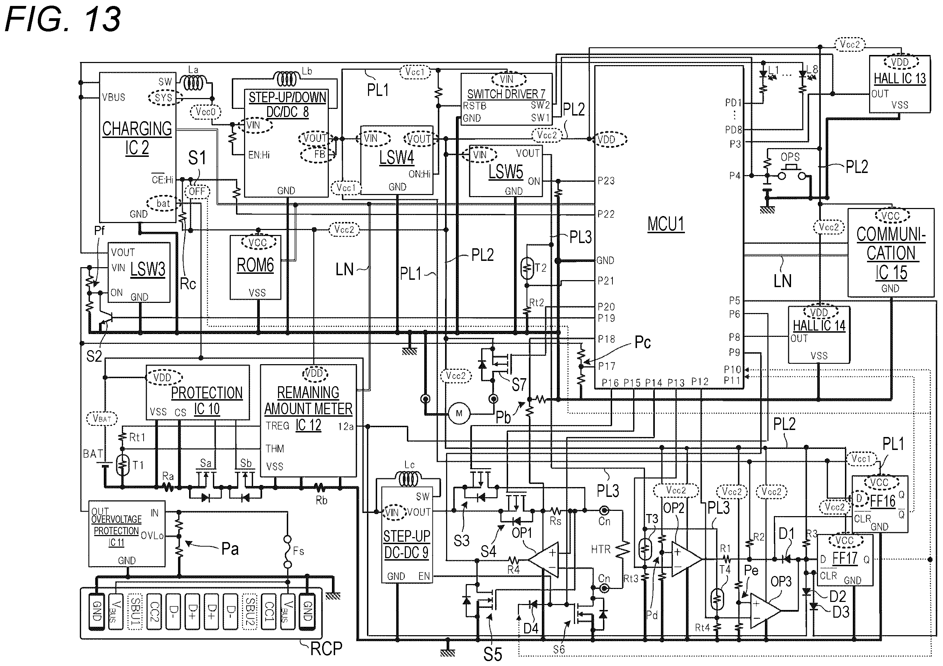

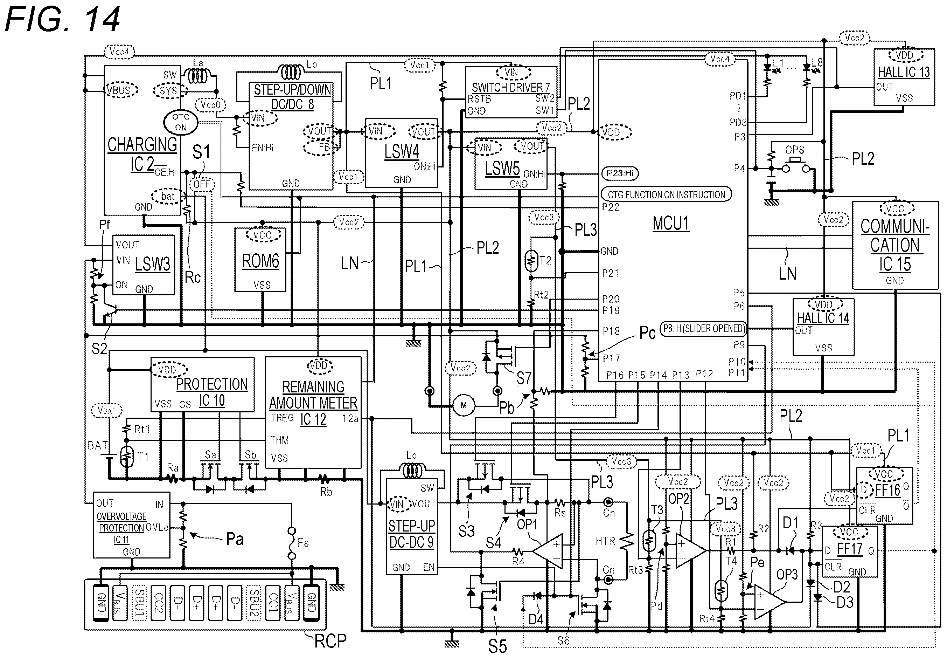

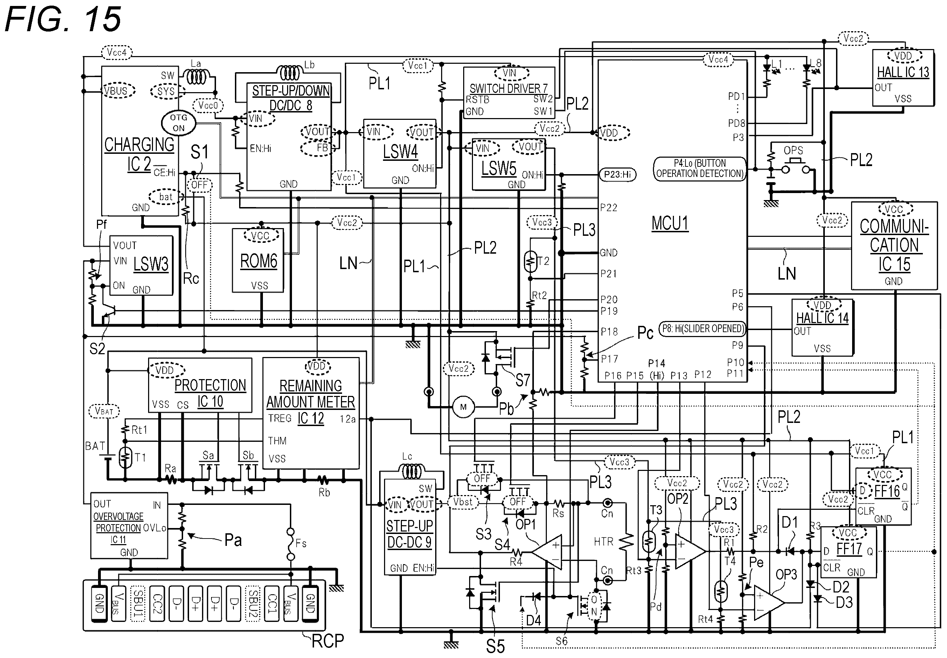

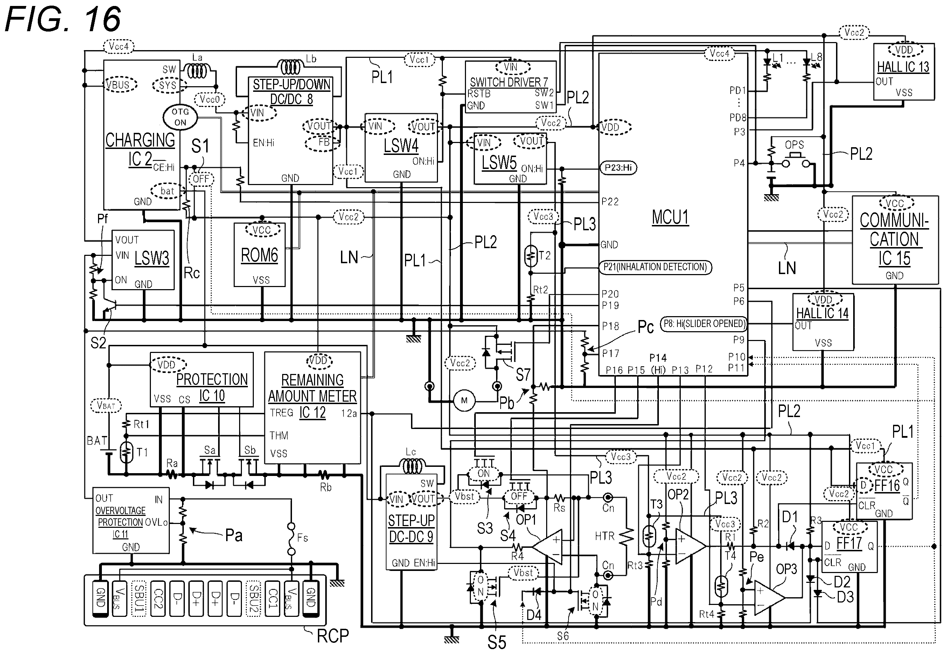

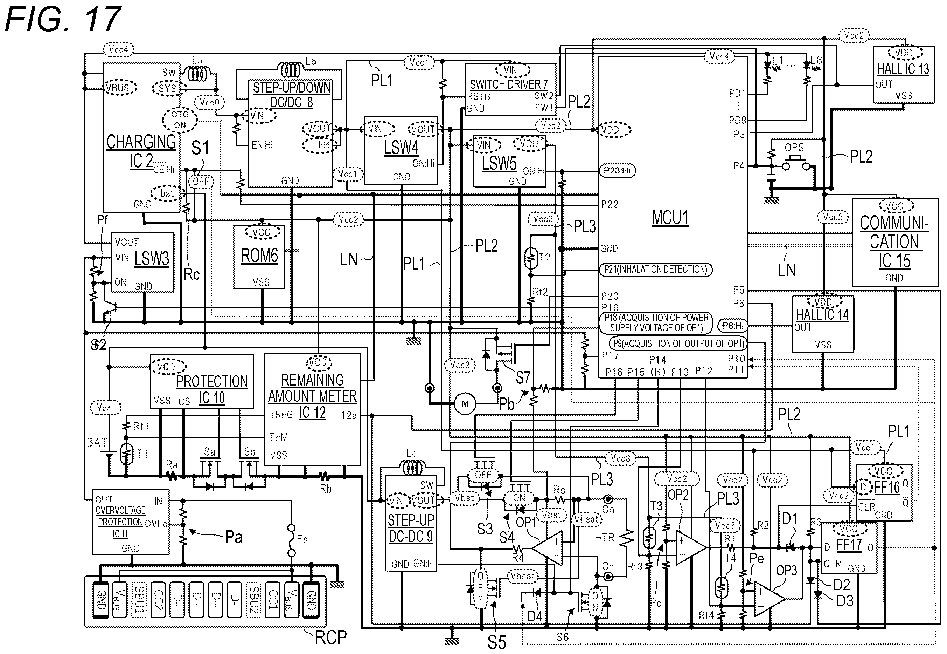

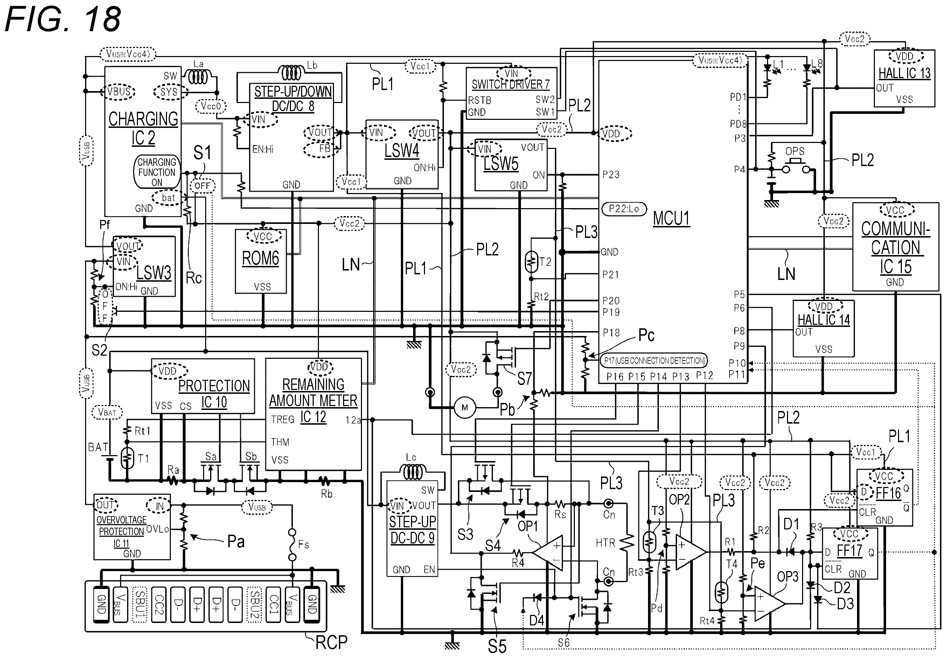

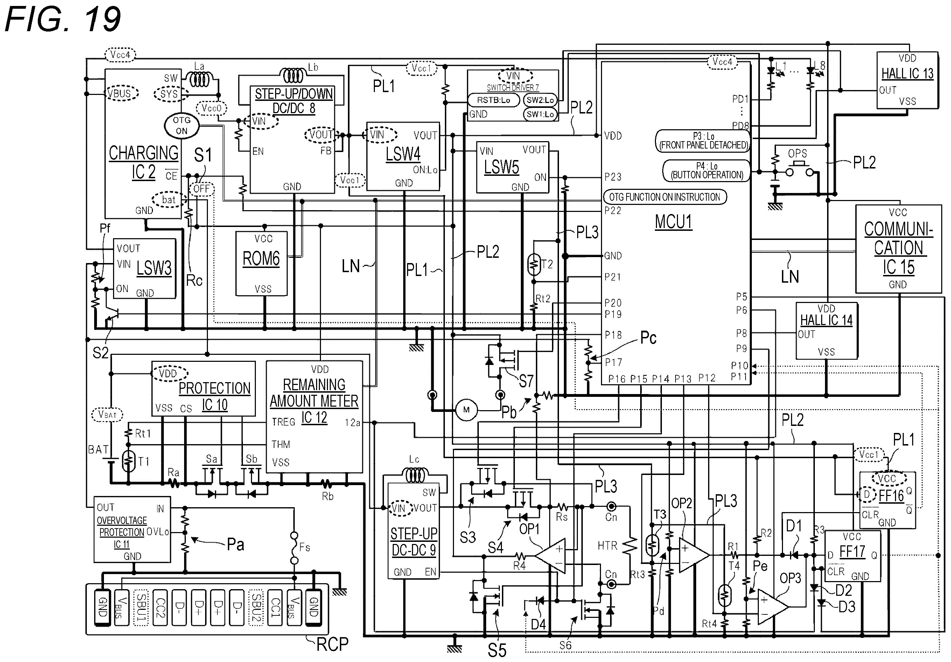

An operation of the electric circuit illustrated in FIG. 10 will be described below with reference to FIGS. 13 to 19. FIG. 13 is a diagram illustrating an operation of the electric circuit in the sleep mode. FIG. 14 is a diagram illustrating an operation of the electric circuit in the active mode. FIG. 15 is a diagram illustrating an operation of the electric circuit in the heating initial setting mode. FIG. 16 is a diagram illustrating an operation of the electric circuit during heating by the heater HTR in the heating mode. FIG. 17 is a diagram illustrating an operation of the electric circuit when a temperature of the heater HTR is detected in the heating mode. FIG. 18 is a diagram illustrating an operation of the electric circuit in the charging mode. FIG. 19 is a diagram illustrating an operation of the electric circuit when the MCU 1 is reset (restarted). In FIGS. 13 to 19, among terminals of the chipped electronic components, terminals surrounded by broken ellipses indicate terminals to which the power supply voltage V_{BAT}, the USB voltage V_{USB}, the system power supply voltages, and the like are input or output.

In any operation mode, the power supply voltage V_{BAT} is input to the power supply terminal VDD of the protection IC 10, the input terminal VIN of the step-up DC/DC converter 9, and the charging terminal bat of the charging IC 2.

### <Sleep Mode: FIG. 13>

The MCU 1 enables the V_{BAT} power pass function of the charging IC 2 and disables the OTG function and the charging function. Since the USB voltage V_{USB} is not input to the input terminal VBUS of the charging IC 2, the V_{BAT} power pass function of the charging IC 2 is enabled. Since a signal for enabling the OTG function from the communication line LN is not output from the MCU 1 to the charging IC 2, the OTG function is disabled. Therefore, the charging IC 2 generates the system power supply voltage Vcc0 from the power supply voltage V_{BAT} input to the charging terminal bat, and outputs the system power supply voltage Vcc0 from the output terminal SYS. The system power supply voltage Vcc0 output from the output terminal SYS is input to the input terminal VIN and the enable terminal EN of the step-up/down DC/DC converter 8. The step-up/down DC/DC converter 8 is enabled when the high-level system power supply voltage Vcc0 is input to the enable terminal EN which has a positive logic, generates the system power supply voltage Vcc1 from the system power supply voltage Vcc0, and outputs the system power supply voltage Vcc1 from the output terminal VOUT. The system power supply voltage Vcc1 outputted from the output terminal VOUT of the step-up/down DC/DC converter 8 is supplied to the input terminal VIN of the LSW4, the control terminal ON of the LSW4, the input terminal VIN of the switch driver 7, and the power supply terminal VCC and the D terminal of the FF 16, respectively.

When the system power supply voltage Vcc1 is input to the control terminal ON, the LSW 4 outputs, from the output terminal VOUT, the system power supply voltage Vcc1 input to the input terminal VIN as the system power supply voltage Vcc2. The system power supply voltage Vcc2 output from the LSW4 is input to the power supply terminal VDD of the MCU 1, the input terminal VIN of the LSW5, the power supply terminal VDD of the Hall IC 13, the power supply terminal VCC of the communication IC 15, and the power supply terminal VDD of the Hall IC 14. Further, the system power supply voltage Vcc2 is supplied to the power supply terminal VDD of the remaining amount meter IC 12, the power supply terminal VCC of the ROM 6, the resistor Rc connected to the charge enable terminal CE (⁻) of the charging IC 2 and the bipolar transistor S1, the power supply terminal VCC of the FF 17, the positive power supply terminal of the operational amplifier OP3, the voltage dividing circuit Pe, the positive power supply terminal of the operational amplifier OP2, and the voltage dividing circuit Pd, respectively. The bipolar transistor S1 connected to the charging IC 2 is turned off unless a low-level signal is output from the Q terminal of the FF 17. Therefore, the system power supply voltage Vcc2 generated by the LSW4 is also input to the charge enable terminal CE (⁻) of the charging IC 2. Since the charge enable terminal CE (⁻) of the charging IC 2 has a negative logic, the charging function of the charging IC 2 is turned off in this state.

As described above, in the sleep mode, the LSW5 stops outputting the system power supply voltage Vcc3, and thus the power supply to the electronic components connected to the power supply line PL3 is stopped. In the sleep mode, the OTG function of the charging IC 2 is stopped, and thus the power supply to the LEDs L1 to L8 is stopped.

### <Active Mode: FIG. 14>

Upon detecting that the signal input to the terminal P8 is at a high level and the slider 119 is opened from a state of the sleep mode in FIG. 13, the MCU 1 inputs a high-level signal from the terminal P23 to the control terminal ON of the LSW5. Accordingly, the LSW5 outputs, from the output terminal VOUT, the system power supply voltage Vcc2 inputted to the input terminal VIN as the system power supply voltage Vcc3. The system power supply voltage Vcc3 output from the output terminal VOUT of the LSW 5 is supplied to the thermistor T2, the thermistor T3, and the thermistor T4.

Further, upon detecting that the slider 119 is opened, the MCU 1 enables the OTG function of the charging IC 2 via the communication line LN. Accordingly, the charging IC 2 outputs, from the input terminal VBUS, the system power supply voltage Vcc4 obtained by stepping up the power supply voltage V_{BAT} input from the charging terminal bat. The system power supply voltage Vcc4 output from the input terminal VBUS is supplied to the LEDs L1 to L8.

### <Heating Initial Setting Mode: FIG. 15>

When a signal input to the terminal P4 is at a low level (the operation switch OPS is pressed) from the state of FIG. 14, the MCU 1 performs various settings necessary for heating, and then inputs a high-level enable signal from the terminal P14 to the enable terminal EN of the step-up DC/DC converter 9. Accordingly, the step-up DC/DC converter 9 outputs, from the output terminal VOUT, a drive voltage V_{bst} obtained by stepping up the power supply voltage V_{BAT}. The drive voltage V_{bst} is supplied to the switch S3 and the switch S4. In this state, the switches S3 and S4 are turned off. The switch S6 is turned on by the high-level enable signal output from the terminal P14. Accordingly, when a negative electrode side terminal of the heater HTR is connected to the ground line and the switch S3 is turned on, the heater HTR can be heated. After the enable signal of the high-level signal is output from the terminal P14 of the MCU 1, the mode shifts to the heating mode.

### <Heater Heating in Heating Mode: FIG. 16>

In the state in FIG. 15, the MCU 1 starts switching control of the switch S3 connected to the terminal P16 and switching control of the switch S4 connected to the terminal P15. These switching control may be started automatically when the above-described heating initial setting mode is completed, or may be started by further pressing the operation switch OPS. Specifically, as illustrated in FIG. 16, the MCU 1 turns on the switch S3, turns off the switch S4, supplies the drive voltage V_{bst} to the heater HTR, and executes heating control for heating the heater HTR for aerosol generation. As illustrated in FIG. 17, the MCU 1 turns off the switch S3, turns on the switch S4, and executes temperature detection control for detecting the temperature of the heater HTR.

As illustrated in FIG. 16, during the heating control, the drive voltage V_{bst} is also supplied to a gate of the switch S5, and the switch S5 is turned on. During the heating control, the drive voltage V_{bst} that has passed through the switch S3 is also input to the positive power supply terminal of the operational amplifier OP 1 via the resistor Rs. A resistance value of the resistor Rs is negligibly small as compared with an internal resistance value of the operational amplifier OP 1. Therefore, during the heating control, a voltage input to the positive power supply terminal of the operational amplifier OP1 is substantially equal to the drive voltage V_{bst}.

A resistance value of the resistor R4 is larger than an ON-resistance value of the switch S5. Although the operational amplifier OP 1 operates during the heating control, the switch S5 is turned on during the heating control. In a state where the switch S5 is turned on, an output voltage of the operational amplifier OP1 is divided by a voltage dividing circuit of the resistor R4 and the switch S5 and input to the terminal P9 of the MCU 1. Since the resistance value of the resistor R4 is larger than the ON-resistance value of the switch S5, a voltage input to the terminal P9 of the MCU 1 is sufficiently reduced. Accordingly, a large voltage can be prevented from being input from the operational amplifier OP1 to the MCU 1.

### <Heater Temperature Detection in Heating Mode: FIG. 17>

As illustrated in FIG. 17, during the temperature detection control, the drive voltage V_{bst} is input to the positive power supply terminal of the operational amplifier OP1 and also to the voltage dividing circuit Pb. A voltage divided by the voltage dividing circuit Pb is input to the terminal P18 of the MCU 1. The MCU 1 acquires a reference voltage Vₜₑₘₚ applied to a series circuit of the resistor Rs and the heater HTR during the temperature detection control based on the voltage input to the terminal P18.

During the temperature detection control, the drive voltage V_{bst} (a reference voltage Vₜₑₘₚ) is supplied to the series circuit of the resistor Rs and the heater HTR. A voltage Vₕₑₐₜ obtained by dividing the drive voltage V_{bst} (a reference voltage Vₜₑₘₚ) by the resistor Rs and the heater HTR is input to the non-inverting input terminal of the operational amplifier OP 1. Since the resistance value of the resistor Rs is sufficiently larger than a resistance value of the heater HTR, the voltage Vₕₑₐₜ is sufficiently lower than the drive voltage V_{bst}. During the temperature detection control, when the low voltage Vₕₑₐₜ is also supplied to the gate terminal of the switch S5, the switch S5 is turned off. The operational amplifier OP1 amplifies and outputs a difference between a voltage input to the inverting input terminal and the voltage Vₕₑₐₜ input to the non-inverting input terminal.

An output signal of the operational amplifier OP1 is input to the terminal P9 of the MCU 1. The MCU 1 acquires the temperature of the heater HTR based on the signal input to the terminal P9, the reference voltage Vₜₑₘₚ acquired based on an input voltage of the terminal P18, and an electric resistance value of the known resistor Rs. The MCU 1 executes heating control of the heater HTR (for example, control such that the temperature of the heater HTR becomes a target temperature) based on the acquired temperature of the heater HTR.

The MCU 1 can acquire the temperature of the heater HTR even during a period during which the switch S3 and the switch S4 are turned off (a period during which the heater HTR is not energized). Specifically, the MCU 1 acquires the temperature of the heater HTR based on the voltage input to the terminal P13 (an output voltage of the voltage dividing circuit including the thermistor T3 and the resistor Rt3).

The MCU 1 can also acquire the temperature of the case 110 at any timing. Specifically, the MCU 1 acquires the temperature of the case 110 based on the voltage input to the terminal P12 (an output voltage of the voltage dividing circuit including the thermistor T4 and the resistor Rt4).

### <Charging Mode: FIG. 18>

FIG. 18 illustrates a case where the USB connection is established in a state of the sleep mode. When the USB connection is established, the USB voltage V_{USB} is input to the input terminal VIN of the LSW3 via the overvoltage protection IC 11. The USB voltage V_{USB} is also supplied to the voltage dividing circuit Pf connected to the input terminal VIN of the LSW3. Since the bipolar transistor S2 is turned on immediately after the USB connection is established, a signal input to the control terminal ON of the LSW3 remains at a low level. The USB voltage V_{USB} is also supplied to the voltage dividing circuit Pc connected to the terminal P17 of the MCU 1, and a voltage divided by the voltage dividing circuit Pc is input to the terminal P17. The MCU 1 detects that the USB connection is established based on the voltage input to the terminal P17.

In response to detecting that the USB connection is established, the MCU 1 turns off the bipolar transistor S2 connected to the terminal P19. When a low-level signal is input to a gate terminal of the bipolar transistor S2, the USB voltage V_{USB} divided by the voltage dividing circuit Pf is input to the control terminal ON of the LSW3. Accordingly, a high-level signal is input to the control terminal ON of the LSW3, and the LSW3 outputs the USB voltage V_{USB} from the output terminal VOUT. The USB voltage V_{USB} output from the LSW3 is input to the input terminal VBUS of the charging IC 2. The USB voltage V_{USB} output from the LSW3 is directly supplied to the LEDs L1 to L8 as the system power supply voltage Vcc4.

In response to detecting that the USB connection is established, the MCU 1 further outputs a low-level enable signal from the terminal P22 to the charge enable terminal CE (⁻) of the charging IC 2. Accordingly, the charging IC 2 enables a charging function of the power supply BAT and starts charging the power supply BAT with the USB voltage V_{USB} input to the input terminal VBUS.

When the USB connection is established in a state of the active mode, the MCU 1 turns off the bipolar transistor S2 connected to the terminal P19 upon detecting that the USB connection is established, outputs a low-level enable signal from the terminal P22 to the charge enable terminal CE (⁻) of the charging IC 2, and further turns off the OTG function of the charging IC 2 by serial communication using the communication line LN. Accordingly, the system power supply voltage Vcc4 supplied to the LEDs L1 to L8 is switched from a voltage generated by the OTG function of the charging IC 2 (voltage based on the power supply voltage V_{BAT}) to the USB voltage V_{USB} output from the LSW3. The LEDs L1 to L8 are not operated unless the built-in transistors are controlled on by the MCU 1. Therefore, an unstable voltage in a transition period from ON to OFF of the OTG function is prevented from being supplied to the LEDs L1 to L8.

In FIG. 18, a supply state of a system power supply voltage in the charging mode is the same as that in the sleep mode. However, the supply state of the system power supply voltage in the charging mode is preferably the same as that in the active mode illustrated in FIG. 14. That is, in the charging mode, it is preferable that the system power supply voltage Vcc3 is supplied to the thermistors T2 to T4 for temperature management to be described later.

### <Reset of MCU: FIG. 19>

When the outer panel 115 is detached and the output of the Hall IC 13 is at a low level and a signal input to the terminal P4 of the MCU 1 is at a low level by an ON operation of the operation switch OPS, the terminal SW1 and the terminal SW2 of the switch driver 7 are both at a low level. Accordingly, the switch driver 7 outputs a low-level signal from the reset input terminal RSTB. The low-level signal output from the reset input terminal RSTB is input to the control terminal ON of the LSW4. Accordingly, the LSW4 stops outputting the system power supply voltage Vcc2 from the output terminal VOUT. When the output of the system power supply voltage Vcc2 is stopped, the system power supply voltage Vcc2 is not input to the power supply terminal VDD of the MCU 1, and thus the MCU 1 is stopped.

The switch driver 7 returns the signal output from the reset input terminal RSTB to a high level when the time during which the low-level signal is output from the reset input terminal RSTB reaches a predetermined time or when the signal input to either the terminal SW1 or the terminal SW2 is at a high level. Accordingly, the control terminal ON of the LSW4 is at a high level, and the system power supply voltage Vcc2 returns to a state of being supplied to each unit.

In order to facilitate understanding, the thermistor T1 described above is also referred to as a power supply thermistor T1, the thermistor T2 described above is also referred to as a puff thermistor T2, the thermistor T3 described above is also referred to as a heater thermistor T3, and the thermistor T4 described above is also referred to as a case thermistor T4.

### (Details of Inhaling Detection)

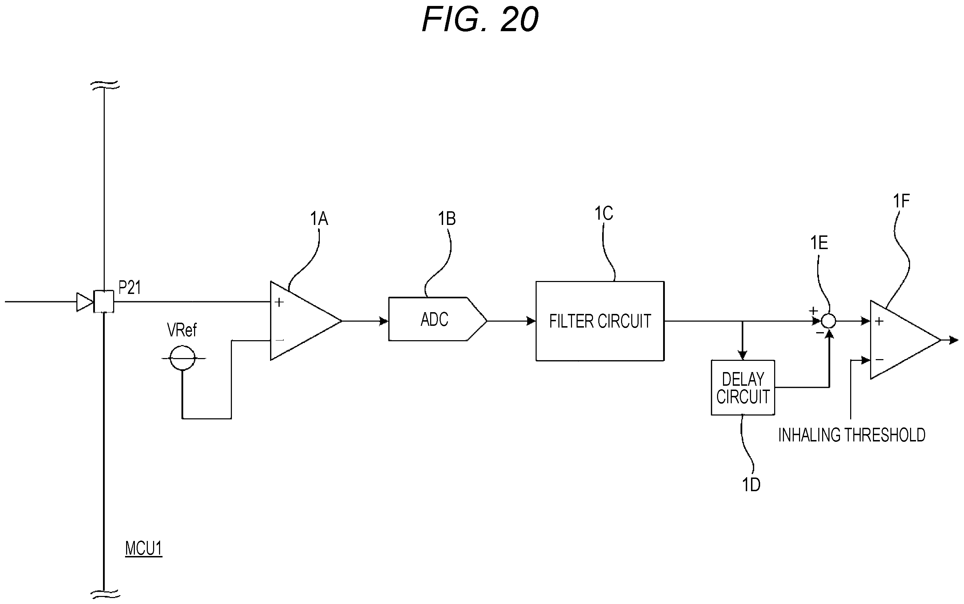

FIG. 20 is a schematic diagram illustrating a detection process of an inhaling operation by the MCU 1 using the puff thermistor T2. As illustrated in FIG. 20, inside the MCU 1, an operational amplifier 1A, an analog-to-digital converter (ADC) 1B, a filter circuit 1C, a delay circuit 1D, a subtractor 1E, and a comparator 1F are provided.

A non-inverting input terminal of the operational amplifier 1A is connected to the terminal P21. A reference voltage V_{Ref} is input to an inverting input terminal of the operational amplifier 1A. The reference voltage V_{Ref} may be generated from the system power supply voltage Vcc2 input to the power supply terminal VDD of the MCU 1. In the example of FIG. 20, the puff thermistor T2 is assumed to have the NTC characteristic. A signal obtained by dividing the system power supply voltage Vcc3 by the puff thermistor T2 and the resistor Rt2 is input to the terminal P21. Therefore, the higher a temperature of the puff thermistor T2, the larger a value of the signal input to the terminal P21. The operational amplifier 1A amplifies and outputs a voltage applied to the puff thermistor T2. The ADC 1B converts an output signal of the operational amplifier 1A into a digital value. The filter circuit 1C performs a filter process such as a high-pass filter, a low-pass filter, and a band-pass filter on a digital signal output from the ADC 1B. The filtered digital signal in the filter circuit 1C is input to a + side of the subtractor 1E. The digital signal is delayed by the delay circuit 1D and input to a - side of the subtractor 1E. Therefore, the subtractor 1E outputs a difference value between a digital signal corresponding to the temperature of the puff thermistor T2 obtained at a time t (n) and a digital signal corresponding to the temperature of the puff thermistor T2 obtained at a time t (n - 1) before a delay time of the time t (n). When the temperature of the puff thermistor T2 decreases from the time t (n - 1) to the time t (n), an output value of the subtractor 1E becomes a negative value and an output of the comparator 1F becomes a low level. When the temperature of the puff thermistor T2 increases from the time t (n - 1) to the time t (n), the output value of the subtractor 1E becomes a positive value, and the output of the comparator 1F becomes a high level.

When the heating initial setting mode is shifted to the heating mode, the MCU 1 starts preheating the heater HTR. As illustrated in FIGS. 6 and 7, the puff thermistor T2 is disposed in the vicinity of the heating unit 170. Therefore, as the temperature of the heater HTR increases by the preheating, the temperature of the puff thermistor T2 also increases accordingly. When the user inhales in this state, the temperature of the puff thermistor T2 slightly decreases due to the flow of the gas inside the case 110. That is, when the user inhales during the preheating of the heater HTR, the output of the subtractor 1E becomes a negative value, and a low-level signal is output from the comparator 1F. When a low-level signal is output from the comparator 1F, the MCU 1 determines that an inhaling operation has been performed.

### (Protection Control)

In the inhaler 100, the temperature of the power supply BAT (hereinafter, referred to as a power supply temperature T_{BAT}) can be acquired based on a resistance value (output value) of the power supply thermistor T 1, the temperature of the heater HTR (hereinafter, referred to as a heater temperature T_{HTR}) can be acquired based on a resistance value (output value) of the heater thermistor T3, and the temperature of the case 110 (hereinafter, referred to as a case temperature T_{CASE}) can be acquired based on a resistance value (output value) of the case thermistor T4. When at least one of the power supply temperature T_{BAT}, the heater temperature T_{HTR}, and the case temperature T_{CASE} is in a state far away from a value under the recommended environment in which the inhaler 100 is used, the inhaler 100 is configured to execute protection control for prohibiting the charging of the power supply BAT and the discharging from the power supply BAT to the heater HTR (hereinafter also referred to as charging and discharging), and thus safety is improved. This protection control is executed by the MCU 1 and the FF 17.

The protection control for prohibiting charging and discharging means controlling the electronic component such that the charging and discharging are disabled. In order to disable the discharging from the power supply BAT to the heater HTR, a low-level signal may be input to the enable terminal EN of the step-up DC/DC converter 9 (or the potential of the enable terminal EN may be indefinite) to stop the step-up operation, and a low-level signal may be input to the gate terminal of the switch S6 (or the potential of the gate terminal may be indefinite) to interrupt the connection between a heater connector Cn (-) on the negative electrode side and the ground. Discharging from the power supply BAT to the heater HTR can also be disabled by performing only one of stopping the step-up operation of the step-up DC/DC converter 9 and interrupting the connection between the heater connector Cn (-) and the ground. In order to disable the charging of the power supply BAT, the charging operation of the charging IC 2 may be stopped by inputting a high-level signal to the charge enable terminal CE (⁻) of the charging IC 2.

An example of prohibiting charging and discharging as protection control will be described below, but from the viewpoint of improving safety, the protection control may be control that prohibits only charging, or control that prohibits only discharging.

When the protection control is executed, the operation modes are preferably limited. Hereinafter, when the protection control is executed, the operation modes are limited. However, since the MCU 1 manages the operation modes, the operation modes may not be limited in a state where the MCU 1 is not operating for any reason.

The protection control executed by the inhaler 100 includes manual return protection control that can be ended when the MCU 1 is reset by a user operation, automatic return protection control that can be automatically terminated by improving the temperature environment without requiring the reset of the MCU 1, and a non-return protection control that cannot be terminated. The operation modes of the inhaler 100 include an error mode and a permanent error mode in addition to the operation modes described with reference to FIG. 9. In this specification, the expression "all operation modes of the inhaler" means all operation modes (all operation modes illustrated in FIG. 9) excluding the error mode and the permanent error mode.

When the manual return protection control or the automatic return protection control is executed, the inhaler 100 shifts to the error mode, and the shift to other operation modes is disabled. In the error mode, a state (supply state of the system power supply voltage) of the power supply voltage in the immediately preceding operation mode is maintained. That is, in the error mode, a function (for example, acquisition of temperature information) that can be executed in the immediately preceding operation mode excluding charging and discharging can be executed. In the error mode, when the MCU 1 is reset, the manual return protection control is ended. In the error mode, when the temperature environment is improved, the automatic return protection control is ended. When the manual return protection control or the automatic return protection control is ended, the restriction of the operation mode is released, and the operation mode shifts to the sleep mode. After that, the operation mode can be changed by the user operation or the like.

When the non-return protection control is executed, the inhaler 100 shifts to the permanent error mode. In the permanent error mode, all the functions of the inhaler 100 become unusable, and the inhaler 100 needs to be repaired or discarded.

The MCU 1 outputs a low-level signal from the terminal P14 to stop the step-up operation of the step-up DC/DC converter 9 and interrupt the connection between the heater connector Cn (-) on the negative electrode side and the ground, and outputs a high-level signal from the terminal P22 to stop the charging operation of the charging IC 2, thereby executing the protection control. When only charging is prohibited, there is no need to output a low-level signal from the terminal P14, and when only discharging is prohibited, there is no need to output a high-level signal from the terminal P22.

The FF 17 outputs a low-level signal from the Q terminal to stop the step-up operation of the step-up DC/DC converter 9, interrupt the connection between the heater connector Cn (-) on the negative electrode side and the ground, and stop the charging operation of the charging IC 2 by turning on the bipolar transistor S1, thereby executing the protection control without passing through the MCU 1.

When the signal input to the CLR (⁻) terminal is switched from a high level to a low level, the FF 17 outputs the low-level signal from the Q terminal. The low-level signal is also input to a P10 terminal of the MCU 1. While the low-level signal is input to the terminal P10, the MCU 1 does not switch a signal input to a CLK terminal (not illustrated) of the FF 17 from a low level to a high level. In other words, while the low-level signal is input to the terminal P10, a CLK signal of the FF 17 does not rise. When the MCU 1 freezes, for example, the signal input to the CLK terminal (not illustrated) of the FF 17 remains at a low level. Therefore, regardless of whether the MCU 1 is operating normally or freezes, even when the signal input to the CLR (⁻) terminal of the FF 17 is switched from a low level to a high level after the low-level signal is output from the Q terminal of the FF 17, the low-level signal continues to be output from the Q terminal of the FF 17. When the MCU 1 is reset as described with reference to FIG. 19, the FF 17 is restarted (the system power supply voltage Vcc2 is supplied again). Since the reset MCU 1 operates in the sleep mode, the system power supply voltage Vcc3 is not supplied to the heater thermistor T3 and the case thermistor T4, and an output of the operational amplifier OP2 and an output of the operational amplifier OP3 are both at a high level. Accordingly, a high-level signal is input to the D terminal and the CLR (⁻) terminal of the FF 17. At this timing, since the low-level signal is not input to the terminal P10 by the restart of the FF 17, the MCU 1 causes the CLK signal of the FF 17 to rise. Accordingly, an output of the Q terminal of the FF 17 can be returned to a high level. When the output of the Q terminal of the FF 17 returns to a high level, the protection control by the FF 17 is ended.

As described above, the signal output from the Q terminal of the FF 17 is also input to the terminal P10 of the MCU 1. Therefore, the MCU 1 can detect that the FF 17 has executed the protection control, based on the low-level signal input to the terminal P10. In response to detecting that the FF 17 has executed the protection control, the MCU 1 preferably causes the notification unit 180 to notify a reset request of the MCU 1 and shifts to the error mode.

In the inhaler 100, thresholds (hereinafter, referred to as temperature thresholds) for temperature determination are set as follows. Numerical values of the temperature thresholds in parentheses and magnitude correlations of the numerical values are preferable examples, and the invention is not limited thereto. Hereinafter, it is assumed that the temperature thresholds are values in parentheses.
Temperature threshold THH0 (340°C)
Temperature threshold THH1 (85°C)
Temperature threshold THH2 (65°C)
Temperature threshold THH3 (60°C)
Temperature threshold THH4 (55°C)
Temperature threshold THH5 (51°C)
Temperature threshold THH6 (48°C)
Temperature threshold THH7 (47°C)
Temperature threshold THH8 (45°C)
Temperature threshold THL1 (0°C)
Temperature threshold THL2 (-5°C)

Next, a configuration of a circuit necessary for illustrating the protection control will be described.

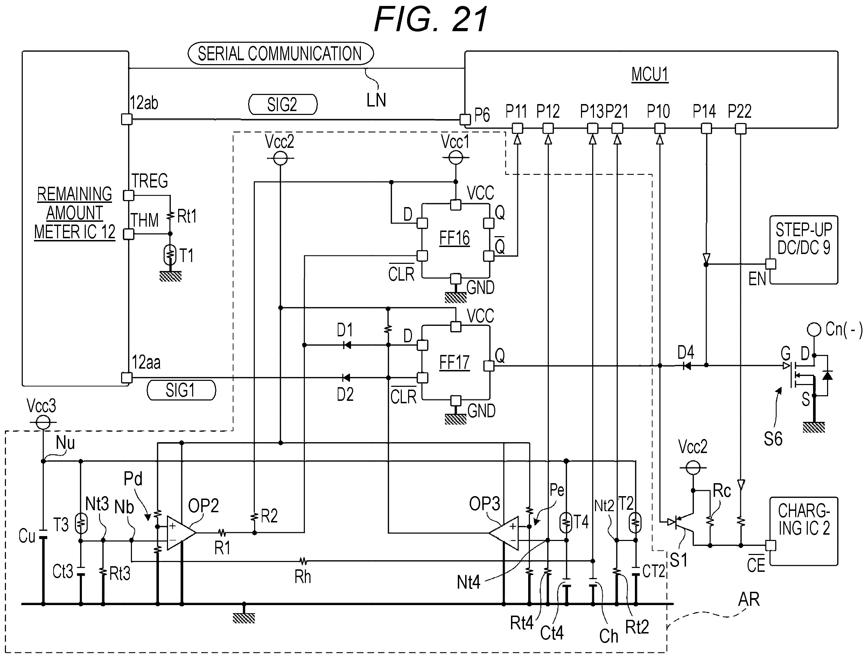

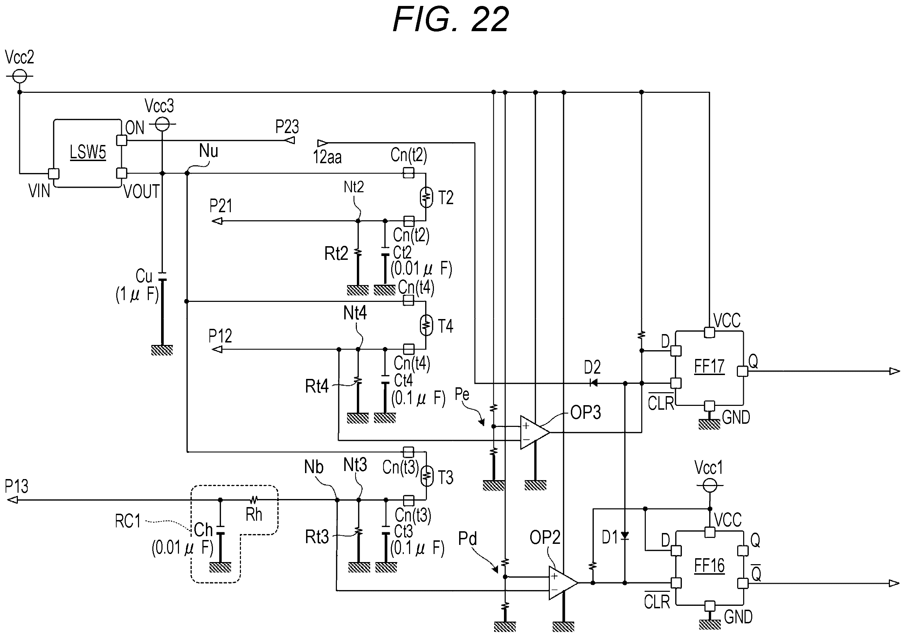

FIG. 21 is a circuit diagram of main parts of the electric circuit illustrated in FIG. 10 with main electronic components related to the thermistors T1 to T4 extracted. FIG. 22 is a diagram illustrating an extracted portion of a range AR surrounded by a broken line in FIG. 21. FIG. 22 illustrates, as an electronic component not illustrated in FIG. 21, the LSW5 that generates the system power supply voltage Vcc3.

FIG. 21 illustrates a capacitor Cu, a capacitor Ct3, a resistor Rh, a capacitor Ct4, a capacitor Ch, a capacitor Ct2, a node Nu, a node Nt2, a node Nt3, a node Nt4, and a node Nb as electronic components and nodes, which are not illustrated in FIG. 10. The capacitor Cu, the capacitor Ct3, the resistor Rh, the capacitor Ct4, the capacitor Ch, and the capacitor Ct2 are provided for the purpose of reducing noise (smoothing signals). In FIG. 10, the notification terminal 12a of the remaining amount meter IC 12, which is a single terminal, is illustrated, and in FIG. 21, a first notification terminal 12aa and a second notification terminal 12ab are illustrated separately.

As illustrated in FIG. 22, the node Nu connects the output terminal VOUT of the LSW5 and a positive electrode side of the connector Cn (t2) at which the puff thermistor T2 is connected. One end of the capacitor Cu is connected to a connection line between the node Nu and the output terminal VOUT of the LSW5. The other end of the capacitor Cu is connected to the ground. A capacitance of the capacitor Cu is, for example, 1 µF. A positive electrode side of the connector Cn (t4) to which the case thermistor T4 is connected and a positive electrode side of the connector Cn (t3) to which the heater thermistor T3 is connected are connected to the node Nu, respectively.

The node Nt2 connects a negative electrode side of the connector Cn (t2) and one end of the resistor Rt2. The other end of the resistor Rt2 is connected to the ground. One end of the capacitor Ct2 is connected to a connection line between the node Nt2 and the negative electrode side of the connector Cn (t2). The other end of the capacitor Ct2 is connected to the ground. A capacitance of the capacitor Ct2 is, for example, 0.01 µF. The node Nt2 is connected to the terminal P21 of the MCU 1.

The node Nt4 connects a negative electrode side of the connector Cn (t4) and one end of the resistor Rt4. The other end of the resistor Rt4 is connected to the ground. One end of the capacitor Ct4 is connected to a connection line between the node Nt4 and the negative electrode side of the connector Cn (t4). The other end of the capacitor Ct4 is connected to the ground. A capacitance of the capacitor Ct4 is, for example, 0.1 µF. The node Nt4 is connected to the terminal P12 of the MCU 1. The inverting input terminal of the operational amplifier OP3 is connected to a connection line between the node Nt4 and the terminal P12 of the MCU 1.

The node Nt3 connects a negative electrode side of the connector Cn (t3) and one end of the resistor Rt3. The other end of the resistor Rt3 is connected to the ground. One end of the capacitor Ct3 is connected to a connection line between the node Nt3 and the negative electrode side of the connector Cn (t3). The other end of the capacitor Ct3 is connected to the ground. A capacitance of the capacitor Ct3 is, for example, 0.1 µF. One end of the resistor Rh is connected to the node Nt3. The other end of the resistor Rh is connected to the terminal P13 of the MCU 1. One end of the capacitor Ch is connected to a connection line between the other end of the resistor Rh and the terminal P13 of the MCU 1. The other end of the capacitor Ch is connected to the ground. A capacitance of the capacitor Ch is, for example, 0.01 µF. The resistor Rh and the capacitor Ch constitute a filter circuit RC1 formed by a primary RC series circuit.

The node Nb connects one end of the resistor Rh and the node Nt3. The inverting input terminal of the operational amplifier OP2 is connected to the node Nb.

### (Preferred Configuration of Capacitor)

It is desirable that the capacitances of the capacitor Cu, the capacitor Ct3, the capacitor Ct4, the capacitor Ch, and the capacitor Ct2 satisfy the following relations (A) to (C).
(A) The capacitance of the capacitor Cu is larger than the capacitance of each of the capacitor Ct3, the capacitor Ct4, and the capacitor Ct2.

As illustrated in FIG. 22, the capacitor Cu is provided on an upstream side (a high- potential side) of three voltage dividing circuits of a voltage dividing circuit of the puff thermistor T2 and the resistor Rt2, a voltage dividing circuit of the case thermistor T4 and the resistor Rt4, and a voltage dividing circuit of the heater thermistor T3 and the resistor Rt3. Since the capacitor Cu having a large capacitance is present at this position, an unstable power supply is less likely to be supplied to each of the voltage dividing circuits, so that output signals of the thermistors T2 to T4 can be stabilized, and the inhaler 100 can be stably operated. Since the capacitor Cu having a large capacitance is present on the upstream side, the capacitances of the capacitor Ct2, the capacitor Ct3, and the capacitor Ct4 provided on a downstream side can be reduced. Therefore, an area of the circuit board can be effectively used, and the cost and size of the inhaler 100 can be reduced. By providing the capacitor Cu, it is possible to obtain an effect of smoothing a transient voltage that may be generated when the LSW 5 is turned on/off intermittently in response to opening and closing of the slider 119, reset of the MCU 1, or the like.

(B) The capacitance of the capacitor Ct2 is smaller than the capacitance of each of the capacitor Ct3 and the capacitor Ct4.

The MCU 1 executes a filter process only on the signal input to the terminal P21 among the signals input to the terminal P21, the terminal P12, and the terminal P13 as described with reference to FIG. 20. The MCU 1 detects an inhaling operation based on a change in the signal input to the terminal P21. Therefore, it is not preferable that the signal input to the terminal P21 is significantly smoothed before input. By reducing the capacitance of the capacitor Ct2, it is difficult to influence a result of the filter process while appropriately removing noise from the output of the puff thermistor T2. Accordingly, the inhaling detection can be performed with high accuracy.

On the other hand, when the capacitor Ct3 and the capacitor Ct4 have a large capacitance, a sufficiently smoothed signal can be input to the operational amplifier OP2 and the operational amplifier OP3. Accordingly, the possibility that the operational amplifier OP2 and the operational amplifier OP3 erroneously operate can be reduced, and the MCU 1 can acquire the output values of the heater thermistor T3 and the case thermistor T4 with high accuracy.

(C) The capacitance of the capacitor Ch is smaller than the capacitance of the capacitor Ct3.

By providing an RC filter circuit RC 1, it is possible to obtain an effect of removing spike noise that cannot be completely smoothed by the capacitor Ct3. That is, the RC filter circuit RC1 plays an auxiliary role of the capacitor Ct3, but by using a capacitor having a capacitance smaller than that of the capacitor Ct3 in the auxiliary RC filter circuit RC1, delay of an output signal of the heater thermistor T3 by the RC filter circuit RC1 can be prevented. As a result, the MCU 1 can acquire the heater temperature T_{HTR} at high speed and low noise.

The output signal of the heater thermistor T3 is also input to the operational amplifier OP2, and an input terminal of the operational amplifier OP2 is connected between the node Nt3 and the RC filter circuit RC1. Therefore, the output signal of the heater thermistor T3, which is input to the operational amplifier OP2, is prevented from being delayed by the RC filter circuit RC 1.

As illustrated in FIG. 21, the first notification terminal 12aa of the remaining amount meter IC 12 is connected to the cathode of the diode D2. The second notification terminal 12ab of the remaining amount meter IC 12 is connected to the terminal P6 of the MCU 1.

The remaining amount meter IC 12 acquires the power supply temperature T_{BAT} at regular timing (for example, every 1 second) and stores the power supply temperature T_{BAT} in a built-in register. The remaining amount meter IC 12 can communicate with the MCU 1 via the communication line LN in operation modes other than the sleep mode in which the MCU 1 is designed to save power. When the remaining amount meter IC 12 receives a transmission request of the power supply temperature T_{BAT} from the MCU 1 via the communication line LN, the remaining amount meter IC 12 transmits the power supply temperature T_{BAT} to the MCU 1 in response to the transmission request.

In the sleep mode, when the power supply temperature T_{BAT} satisfies a high-temperature condition (a condition that a state in which the temperature is equal to or higher than the temperature threshold THH1 (85°C) continues for a plurality of times) (when the output value of the power supply thermistor T1 is abnormal), the remaining amount meter IC 12 outputs a high-temperature notification signal SIG2a from the second notification terminal 12ab. In the sleep mode, the MCU 1 cannot communicate with the remaining amount meter IC 12 via the communication line LN. Accordingly, the high-temperature notification signal SIG2a can also be referred to as an interrupt signal for the MCU 1.

In all the operation modes, when the power supply temperature T_{BAT} satisfies a low-temperature condition (a condition that the temperature is equal to or lower than the temperature threshold THL2 (-5°C)) (when the output value of the power supply thermistor T1 is abnormal), the remaining amount meter IC 12 outputs a low-temperature notification signal SIG2b from the second notification terminal 12ab. In all the operation modes, when the power supply temperature T_{BAT} satisfies a low-temperature release condition (a condition that the temperature is equal to or higher than the temperature threshold THL1 (0°C)) (when the output value of the power supply thermistor T1 is normal), the remaining amount meter IC 12 outputs a low-temperature release notification signal SIG2c from the second notification terminal 12ab. In FIG. 21, the high-temperature notification signal SIG2a, the low-temperature notification signal SIG2b, and the low-temperature release notification signal SIG2c are collectively referred to as a notification signal SIG2. The low-temperature notification signal SIG2b and the low-temperature release notification signal SIG2c are output without waiting for a request from the MCU 1 via the communication line LN. The low-temperature notification signal SIG2b and the low-temperature release notification signal SIG2c may also be referred to as interrupt signals for the MCU 1.

The MCU 1 operating in the sleep mode reduces functions to execution of protection control, and the like based on detection of operation of the operation switch OPS, detection of opening of the slider 119, detection of detachment of the outer panel 115, detection of the USB connection, detection of a notification from the remaining amount meter IC 12, and a notification from the remaining amount meter IC 12, thereby saving energy.

The MCU 1 operating in the sleep mode is started (all functions are enabled) when the slider 119 is opened, and shifts the operation mode of the inhaler 100 to the active mode as described above. In addition, when the MCU 1 receives the high-temperature notification signal SIG2a from the remaining amount meter IC 12 at the terminal P6 (when the output value of the power supply thermistor T1 is abnormal) in the sleep mode, the MCU 1 is started and shifts the operation mode of the inhaler 100 to the active mode.

When the MCU 1 receives the low-temperature notification signal SIG2b from the remaining amount meter IC 12 at the terminal P6 (when the output value of the power supply thermistor T1 is abnormal) in the sleep mode, the MCU 1 executes the automatic return protection control and shifts the operation mode of the inhaler 100 to the error mode. After the execution of the automatic return protection control, when the MCU 1 receives the low-temperature release notification signal SIG2c at the terminal P6 (when the output value of the power supply thermistor T1 is normal), the MCU 1 terminates the automatic return protection control and returns to the sleep mode.

When the power supply temperature T_{BAT} satisfies a high-temperature condition (a condition that the temperature is equal to or higher than the temperature threshold THH3 (60°C)) (when the output value of the power supply thermistor T1 is abnormal), the remaining amount meter IC 12 outputs a low-level high-temperature notification signal SIG1 from the first notification terminal 12aa. When the low-level high-temperature notification signal SIG1 is output from the first notification terminal 12aa, the CLR (⁻) terminal of the FF 17 is at a low level. That is, an output of the Q terminal of the FF 17 is at a low level, and the manual return protection control is executed. The protection control based on the high-temperature notification signal SIG1 can be executed in all the operation modes.

A resistance value of the voltage dividing circuit Pd connected to the non-inverting input terminal of the operational amplifier OP2 is determined such that an output of the operational amplifier OP2 is at a low level when a temperature of the heater thermistor T3 is equal to or higher than the temperature threshold THH0 (340°C) (when the output value of the heater thermistor T3 is abnormal). The temperature of the heater thermistor T3 is a high-temperature close to the temperature threshold THH0 (340°C) in the heating mode. Therefore, in the heating mode, when a low-level signal is output from the operational amplifier OP2, the CLR (⁻) terminal of the FF 17 is at a low level. That is, the output of the Q terminal of the FF 17 is at a low level, and the manual return protection control is executed. The protection control based on the output of the operational amplifier OP2 can be executed in an operation mode (in other words, operation modes other than the sleep mode) in which power supply is supplied to the heater thermistor T3.

A resistance value of the voltage dividing circuit Pe connected to the non-inverting input terminal of the operational amplifier OP3 is determined such that an output of the operational amplifier OP3 is at a low level when a temperature of the case thermistor T4 is equal to or higher than the temperature threshold THH3 (60°C) (when the output value of the case thermistor T4 is abnormal). When a low-level signal is output from the operational amplifier OP3, the CLR (⁻) terminal of the FF 17 is at a low level. That is, an output of the Q terminal of the FF 17 is at a low level, and the manual return protection control is executed. The protection control based on the output of the operational amplifier OP3 can be executed in an operation mode (in other words, operation modes other than the sleep mode) in which power supply is supplied to the case thermistor T4.

As described above, since the FF 17 can execute the protection control without using the MCU 1, charging and discharging can be prohibited based on any one of the power supply temperature T_{BAT}, the heater temperature T_{HTR}, and the case temperature T_{CASE} even when the MCU 1 is designed to save power in the sleep mode or the MCU 1 does not operate normally due to several reasons. Accordingly, the safety of the inhaler 100 can be improved.

In the sleep mode, a power supply voltage (system power supply voltage Vcc3) is not supplied to the thermistors T2 to T4. Therefore, the FF 17 cannot prohibit charging and discharging based on either the heater temperature T_{HTR} or the case temperature T_{CASE}. On the other hand, the power supply voltage is supplied to the power supply thermistor T 1 in all the operation modes. Therefore, the protection control by the FF 17 can be executed in all the operation modes.

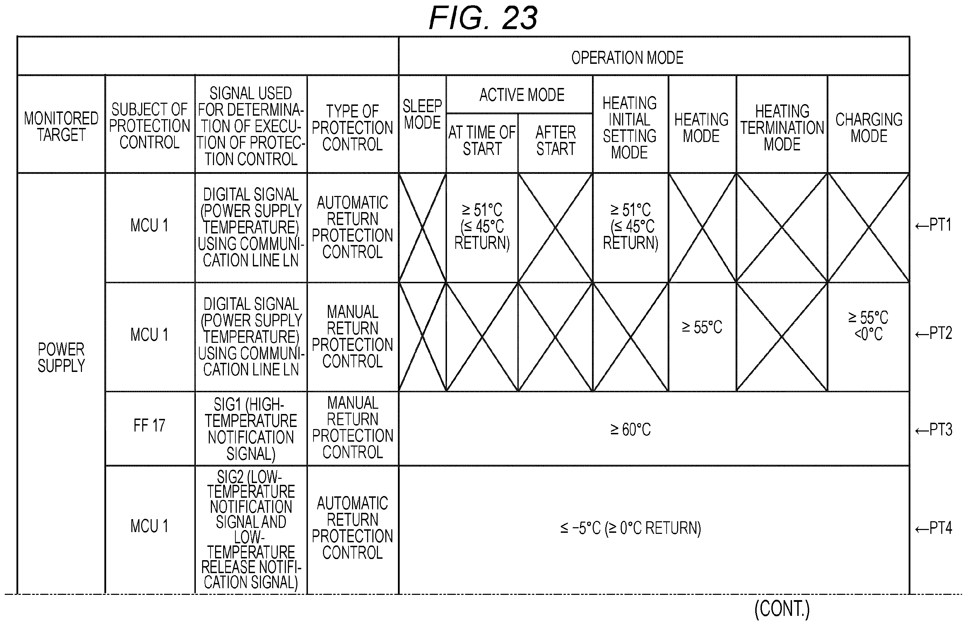

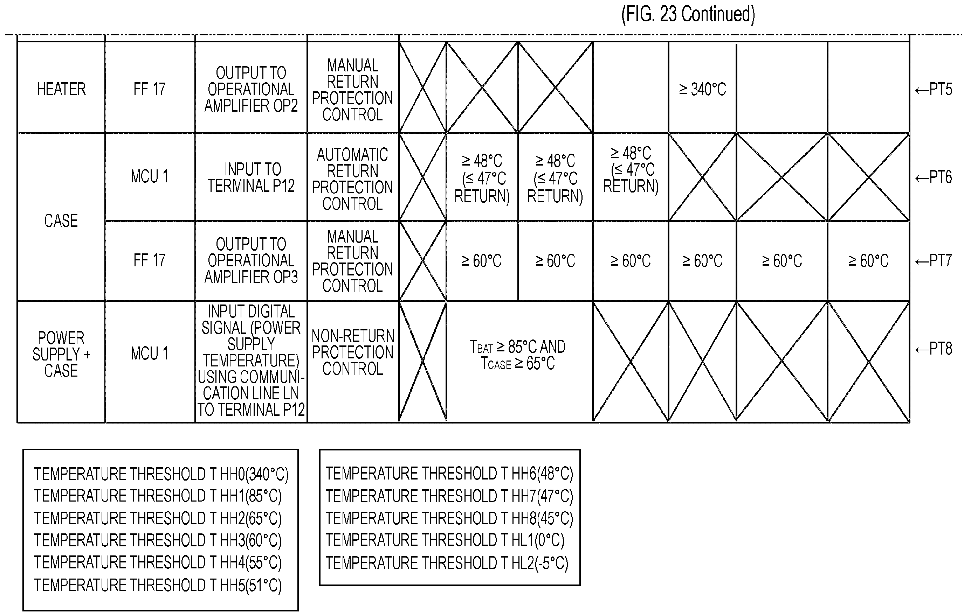

The MCU 1 mainly executes protection control in the operation modes other than the sleep mode. This will be specifically described below with reference to FIG. 23. FIG. 23 is a diagram illustrating a specific example of a pattern of protection control executed by the inhaler 100. FIG. 23 also illustrates a relation between the temperature and the temperature threshold in the drawing for the sake of understanding.

### (Pattern of Protection Control)

As illustrated in FIG. 23, the protection control executed based only on the power supply temperature T_{BAT} includes patterns PT 1 to PT4. The protection control executed based on only the heater temperature T_{HTR} includes a pattern PT5. The protection control executed based on only the case temperature T_{CASE} includes a pattern PT6 and a pattern PT7. The protection control executed based on the power supply temperature T_{BAT} and the case temperature T_{CASE} includes a pattern PT8. Hereinafter, each pattern will be described.

### (Pattern PT 1)

The protection control is executed by the MCU 1, and the type of the protection control is the automatic return protection control. The MCU 1 can execute the automatic return protection control in each of the shift period from the sleep mode to the active mode (a period until a start process to enable all functions is completed) and the heating initial setting mode. The MCU 1 periodically requests the remaining amount meter IC 12 to acquire the power supply temperature T_{BAT} via the communication line LN in each of the shift period and the heating initial setting mode. When the power supply temperature T_{BAT} transmitted from the remaining amount meter IC 12 in response to the acquisition request is equal to or higher than the temperature threshold THH5 (51°C) on the high-temperature side, the MCU 1 determines that the output value of the power supply thermistor T1 is abnormal, and executes the automatic return protection control. After the execution of the automatic return protection control, when the power supply temperature T_{BAT} transmitted from the remaining amount meter IC 12 is equal to or lower than the temperature threshold THH8 (45°C) that is lower than the temperature threshold THH5, the MCU 1 determines that the output value of the power supply thermistor T1 is normal, terminates the automatic return protection control, and shifts to the sleep mode.

### (Pattern PT2)

The protection control is executed by the MCU 1, and the type of the protection control is the manual return protection control. The MCU 1 can execute the manual return protection control in each of the heating mode and the charging mode. The MCU 1 periodically requests the remaining amount meter IC 12 to acquire the power supply temperature T_{BAT} via the communication line LN in each of the heating mode and the charging mode. When the power supply temperature T_{BAT} transmitted from the remaining amount meter IC 12 is equal to or higher than the temperature threshold THH4 (55°C) on the high-temperature side, the MCU 1 operating in the heating mode determines that the output value of the power supply thermistor T1 is abnormal, and executes the manual return protection control. When the power supply temperature T_{BAT} transmitted from the remaining amount meter IC 12 is equal to or higher than the temperature threshold THH4 (55°C) and when the power supply temperature T_{BAT} transmitted from the remaining amount meter IC 12 is lower than the temperature threshold THL1 (0°C) on the low-temperature side, the MCU 1 operating in the charging mode determines that the output value of the power supply thermistor T1 is abnormal, and executes the manual return protection control.

### (Pattern PT3)

The protection control is executed by the FF 17, and the type of the protection control is the manual return protection control. The FF 17 can execute manual return protection control in all operation modes. In all the operation modes, when the FF 17 receives the notification signal SIG1 (a signal indicating that the power supply temperature T_{BAT} is equal to or higher than the temperature threshold THH3 (60°C)) from the remaining amount meter IC 12 at the CLR terminal (⁻) (when the output value of the power supply thermistor T1 is abnormal), the FF 17 executes the manual return protection control.

### (Pattern PT4)

The protection control is executed by the MCU 1, and the type of the protection control is the automatic return protection control. The MCU 1 can execute automatic return protection control in all operation modes. When the MCU 1 receives the low-temperature notification signal SIG2b from the remaining amount meter IC 12 at the terminal P6, the MCU 1 determines that the output value of the power supply thermistor T 1 is abnormal, and executes the automatic protection control. After the execution of the automatic return protection control, when the MCU 1 receives the low-temperature release notification signal SIG2c at the terminal P6, the MCU 1 determines that the output value of the power supply thermistor T 1 is normal, and terminates the automatic protection control.

### (Pattern PT5)

The protection control is executed by the FF 17, and the type of the protection control is the manual return protection control. The FF 17 can execute the manual return protection control in the operation modes other than the sleep mode. When the FF 17 receives a low-level signal from the operational amplifier OP2 at the CLR (⁻) terminal (when the output value of the heater thermistor T3 is abnormal), the FF 17 executes the manual return protection control. In the operation modes other than the heating mode, the possibility that the temperature of the heater thermistor T3 is close to the temperature threshold THH0 (340°C) is extremely low. Therefore, in FIG. 23, an operation mode in which the manual return protection control is executed is illustrated as only the heating mode.

### (Pattern PT6)

The protection control is executed by the MCU 1, and the type of the protection control is the automatic return protection control. The MCU 1 can execute the automatic return protection control in the active mode and the heating initial setting mode. When the case temperature T_{CASE} based on the signal (a signal corresponding to the resistance value of the case thermistor T4) input to the terminal P 12 is equal to or higher than the temperature threshold THH6 (48°C), the MCU 1 operating in these operation modes determines that the output value of the case thermistor T4 is abnormal, and executes the automatic return protection control. After the execution of the automatic return protection control, when the case temperature T_{CASE} based on the signal input to the terminal P 12 is equal to or lower than the temperature threshold THH7 (47°C) that is lower than the temperature threshold THH6, the MCU 1 determines that the output value of the case thermistor T4 is normal, and terminates the automatic return protection control.

In the pattern PT6, the protection control is disabled in the charging mode and the heating mode, and the protection control may be enabled in one of the charging mode and the heating mode.

### (Pattern PT7)

The protection control is executed by the FF 17, and the type of the protection control is the manual return protection control. The FF 17 can execute the manual return protection control in the operation modes other than the sleep mode. In these operation modes, when the FF 17 receives a low-level signal (a signal indicating that the case temperature T_{CASE} is equal to or higher than the temperature threshold THH3 (60°C)) from the operational amplifier OP3 at the CLR (⁻) terminal (when the output of the case thermistor T4 is abnormal), the FF 17 executes the manual return protection control.

### (Pattern PT8)

The protection control is executed by the MCU 1, and the type of the protection control is the non-return protection control. The non-return protection control can be executed when the high-temperature notification signal SIG2a is output from the remaining amount meter IC 12 in the sleep mode. When the MCU 1 operating in the sleep mode receives the high-temperature notification signal SIG2a, the MCU 1 shifts to the active mode, and executes a primary check for determining whether the output value of each of the power supply thermistor T1 and the case thermistor T4 is abnormal. Specifically, when the power supply temperature T_{BAT} transmitted from the remaining amount meter IC 12 via the communication line LN is equal to or higher than the temperature threshold THH1 (85°C) on the high-temperature side and the case temperature T_{CASE} based on the signal input to the terminal P12 (a signal corresponding to the resistance value of the case thermistor T4) is equal to or higher than the temperature threshold THH2 (65°C), the MCU 1 determines that the output value of each of the power supply thermistor T1 and the case thermistor T4 is abnormal, and executes the non-return protection control.

The protection control of the pattern PT8 is the non-return protection control, but may be the manual return protection control instead. A situation in which the output value of each of the power supply thermistor T 1 and the case thermistor T4 is abnormal is a situation in which it is estimated that an abnormality strongly occurs in the inhaler 100. In such a situation, the safety of the inhaler 100 can be improved by preventing the protection control from being automatically terminated by the non-return protection control or the manual return protection control.

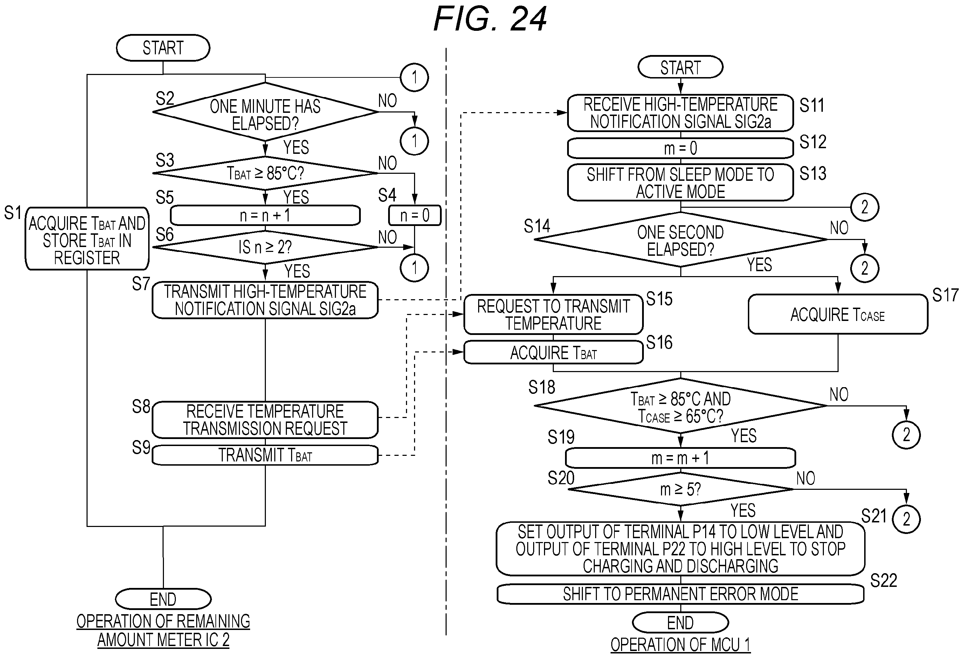

FIG. 24 is a flowchart illustrating an example of operations of the remaining amount meter IC 12 and the MCU 1 in a case where the high-temperature notification signal SIG2a is output from the remaining amount meter IC 12 in a state of the sleep mode.

The remaining amount meter IC 12 acquires the power supply temperature T_{BAT} at intervals of, for example, 1 second and stores the acquired power supply temperature T_{BAT} in the built-in register (step S1). In parallel with the process of step S1, the remaining amount meter IC 12 determines whether the power supply temperature T_{BAT} is abnormal, for example, at intervals of one minute. Specifically, the remaining amount meter IC 12 determines whether one minute has elapsed since the last abnormality determination (step S2). If the determination in step S2 is yes, the remaining amount meter IC 12 determines whether the latest power supply temperature T_{BAT} stored in the built-in register is equal to or higher than the temperature threshold THH1 (85°C) (step S3). If the determination in step S3 is no, the remaining amount meter IC 12 reset a numerical value n of a built-in counter to 0 of an initial value (step S4), and returns the process to step S2.

If the determination in step S3 is yes, the remaining amount meter IC 12 increases the numerical value n of the built-in counter by one (step S5). Thereafter, when the numerical value n is less than 2 (step S6: no), the remaining amount meter IC 12 returns the process to step S2, and when the numerical value n is equal to or greater than 2 (step S6: yes), the remaining amount meter IC 12 transmits the high-temperature notification signal SIG2a to the MCU 1 (step S7). The determination threshold (= 2) in step S6 is merely an example, and any natural number equal to or greater than 1 may be used.

When the MCU 1 operating in the sleep mode receives the high-temperature notification signal SIG2a transmitted in step S7 (step S11), the MCU 1 resets a numerical value m of the built-in counter to 0 of the initial value (step S12), and changes the operation mode to the active mode (step S13). Thereafter, the MCU 1 starts the abnormality determination of the power supply temperature T_{BAT} and the case temperature T_{CASE}.

Specifically, when one second elapses (step S14: yes), the MCU 1 requests the remaining amount meter IC 12 to transmit the power supply temperature T_{BAT} via the communication line LN (step S15). Upon receiving the request (step S8), the remaining amount meter IC 12 acquires the power supply temperature T_{BAT} and transmits the acquired power supply temperature T_{BAT} to the MCU 1 via the communication line LN (step S9). The MCU 1 receives and acquires the power supply temperature T_{BAT} transmitted from the remaining amount meter IC 12 in step S9 (step S16).

The MCU 1 executes a process of step S17 in parallel with processes of step S15 and step S16. In step S17, the MCU 1 acquires the case temperature T_{CASE} based on the signal input to the terminal P12. After step S16 and step S17, the MCU 1 determines whether the power supply temperature T_{BAT} acquired in step S16 is equal to or higher than the temperature threshold THH1 (85°C) and the case temperature T_{CASE} acquired in step S17 is equal to or higher than the temperature threshold THH2 (65°C) (step S18).

When the determination in step S18 is no, the MCU 1 returns the process to step S14. Alternatively, when the determination in step S18 is no, the MCU 1 may terminate the process. When the determination in step S18 is yes, the MCU 1 increases the numerical value m by one (step S19). Thereafter, the MCU 1 determines whether the numerical value m is equal to or greater than 5 (step S20). When the determination in step S20 is no, the MCU 1 returns the process to step S14. When the determination in step S20 is yes, the MCU 1 executes protection control for outputting a low-level signal from the terminal P14 and outputting a high-level signal from the terminal P22 (step S21). After step S21, the MCU 1 shifts the operation mode to the permanent error mode (step S22). The determination threshold (= 5) in step S20 is merely an example, and any natural number equal to or greater than 1 may be used.

As illustrated in FIG. 23, the inhaler 100 executes the protection control in a plurality of patterns in which a subject of the protection control is different, a type of protection control is different, a type of a signal used for determination of execution of the protection control is different, or an executable operation mode is different. As described above, since the protection control can be appropriately executed according to a temperature measurement target and a situation, the safety of the inhaler 100 can be improved.

In the above-described embodiment, the protection control of the pattern PT8 is triggered by the high-temperature notification signal SIG2a output from the remaining amount meter IC 12. Instead of the present embodiment, the protection control of the pattern PT8 may be executed without being triggered by the high-temperature notification signal SIG2a. That is, after the MCU 1 normally shifts from the sleep mode to another mode by connecting the external power supply (USB connection) to the receptacle RCP or opening the slider 119, the MCU 1 may execute the non-return protection control when the power supply temperature T_{BAT} is equal to or higher than the temperature threshold THH1 (85°C) on the high-temperature side, and the case temperature T_{CASE} is equal to or higher than the temperature threshold THH2 (65°C). The protection control of the pattern PT8 is realized by omitting steps S2 to S7 and steps S11 to S13 in the flowchart illustrated in FIG. 24.

### (Preferred Arrangement of Case Thermistor T4)

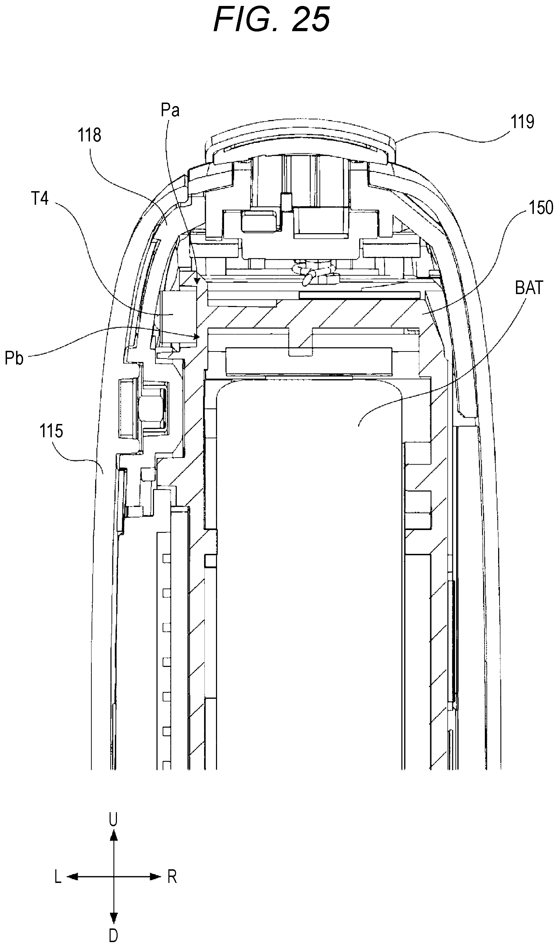

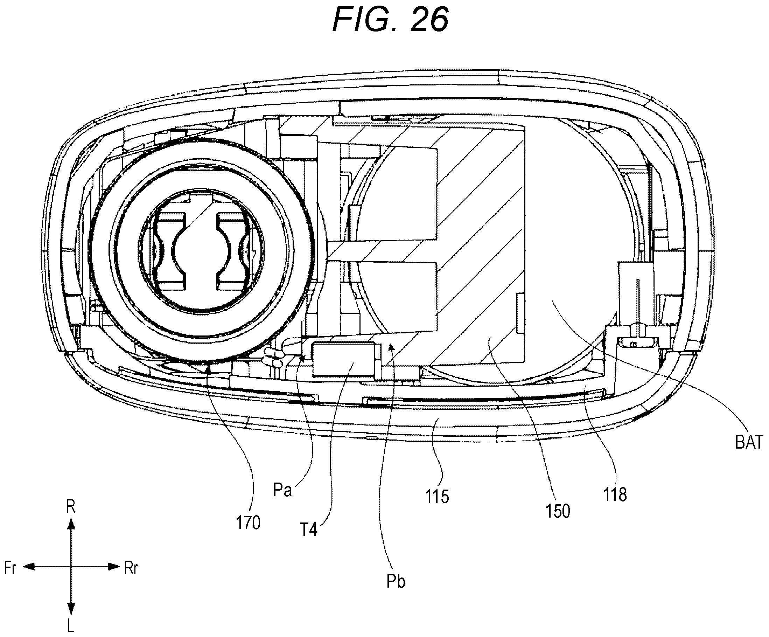

FIGS. 25 and 26 are cross-sectional views taken along a section passing through the case thermistor T4 of the inhaler 100 illustrated in FIG. 1. FIG. 25 is a cross-sectional view taken along a section perpendicular to the front-rear direction. FIG. 26 is a cross-sectional view taken along a section perpendicular to the up-down direction.

The heating unit 170 including the heater HTR, the power supply BAT, and the case thermistor T4 are fixed to the chassis 150 inside the case 110. As illustrated in FIG. 26, the heating unit 170 and the power supply BAT are disposed side by side in the front-rear direction, and the case thermistor T4 is fixed to the chassis 150 to be positioned between the heating unit 170 and the power supply BAT in the front-rear direction. As illustrated in FIGS. 25 and 26, the chassis 150 includes a portion Pb positioned between the power supply BAT and the case thermistor T4, and a portion Pa positioned between the heating unit 170 and the case thermistor T4.

As described above, a position of the case thermistor T4 is fixed by the chassis 150 used for fixing another electronic component. Therefore, the case thermistor T4 can accurately obtain the temperature of the case 110 while avoiding an increase in a manufacturing cost of the inhaler 100. As illustrated in FIG. 26, since the case thermistor T4 is not positioned toward an end in the front-rear direction, heat of the hand of the user generated when the user grips the case 110 is less likely to influence the case thermistor T4. Further, heat generated by the power supply BAT or the heater HTR is less likely to be transferred to the case thermistor T4 due to the presence of the portion Pa or the portion Pb. Therefore, the environment in which the inhaler 100 is placed can be more accurately grasped from the output value of the case thermistor T4.

Even when one of the portion Pa and the portion Pb of the chassis 150 is omitted, the heat generated by the power supply BAT or the heater HTR is less likely to be transferred to the case thermistor T4 due to the presence of the other of the portion Pa and the portion Pb.

Although various embodiments have been described above with reference to the drawings, it is needless to say that the invention is not limited thereto. It is apparent to those skilled in the art that various modifications or corrections can be conceived within the scope described in the claims, and it is understood that the modifications or corrections naturally fall within the technical scope of the invention.

In the present description, at least the following matters are described. In parentheses, corresponding constituent components and the like in the above-mentioned embodiment are indicated, but the invention is not limited thereto.
(1) A power supply unit (inhaler 100) for an aerosol generation device, including:
   a power supply (a power supply BAT);
   a heater connector (a heater connector Cn) to which a heater (a heater HTR) configured to heat an aerosol source by consuming power supplied from the power supply is connected;
   a first sensor (a heater thermistor T3 or a power supply thermistor T1) disposed in the vicinity of the heater or the power supply and configured to output a value related to a temperature of the heater or a value related to a temperature of the power supply; and
   a second sensor (a case thermistor T4) provided at a position separated from the first sensor and configured to output a value related to a temperature at the position, in which
   when at least one of the output value of the first sensor and the output value of the second sensor is abnormal, at least one or both of charging of the power supply and discharging from the power supply to the heater are temporarily prohibited.

   According to (1), even when one of the first sensor and the second sensor cannot detect an abnormality due to several factors, if the other is abnormal, one of the charging of the power supply and the discharging of the power supply to the heater can be stopped, and thus the safety of the aerosol generation device can be improved.
(2) The power supply unit of the aerosol generation device according to (1), further including:
   an MCU (MCU 1) configured to control supply of power from the power supply to the heater, in which
   when the output value of the first sensor is abnormal, a first protection control (protection control of a pattern PT3 or a pattern PT5 in FIG. 23) for prohibiting one or both of the charging and the discharging is executed without using the MCU, and
   when the output value of the second sensor is abnormal, a second protection control (protection control of a pattern PT7 in FIG. 23) for prohibiting one or both of the charging and the discharging is executed without using the MCU.

   According to (2), even when an abnormality such as freeze occurs in the MCU, protection control using each of the first sensor and the second sensor can be executed. Therefore, even when the MCU does not operate normally, the safety of the aerosol generation device can be improved.
(3) The power supply unit of the aerosol generation device according to (2), in which
   restart of the MCU is necessary for termination of the first protection control, and
   restart of the MCU is necessary for termination of the second protection control.

   When the protection control for prohibiting one of the charging of the power supply and the discharging of the power supply to the heater is performed without using the MCU, there is no guarantee that the MCU normally operates. For this reason, as illustrated in (3), since restart of the MCU is required to end the protection control, the MCU can be normally operated to normalize the control of the aerosol generation device.
(4) The power supply unit of the aerosol generation device according to (2) or (3), in which
   the power supply unit of the aerosol generation device is operable in a plurality of modes, and
   in a mode in which one of the first protection control (protection control of a pattern PT3 in FIG. 23) and the second protection control (protection control of a pattern PT7 in FIG. 23) is not executable among the plurality of modes, the other of the first protection control and the second protection control is executable.

   In a mode in which only one of the two types of protection control can be executed, power consumption can be reduced as compared with a case where both of the two types of protection control can be executed. Therefore, according to (4), power saving of the aerosol generation device can be achieved while ensuring safety.
(5) The power supply unit of the aerosol generation device according to (4), further including:
   a case (a case 110) forming a surface of the power supply unit, in which
   the first sensor (a power supply thermistor T1) is disposed in the vicinity of the power supply and configured to output a value related to a temperature of the power supply,
   the second sensor (a case thermistor T4) is disposed in the vicinity of the case and configured to output a value related to a temperature of the case, and
   in a mode (a sleep mode) in which the second protection control (the protection control of the pattern PT7 in FIG. 23) is not executable among the plurality of modes, the first protection control (the protection control of the pattern PT3 in FIG. 23) is executable.

   The power supply is an important component having a more complicated structure than the case. According to (5), the first protection control based on the temperature of the power supply can be executed in a mode in which the second protection control cannot be executed. Therefore, the power saving of the aerosol generation device can be achieved by reducing a mode in which both the first protection control and the second protection control can be executed while ensuring safety more appropriately.
(6) The power supply unit of the aerosol generation device according to (5), in which
   the first protection control (the protection control of the pattern PT3 in FIG. 23) is executable in all the modes.
   According to (6), since the first protection control based on the temperature of the power supply can be executed in all the modes, the power saving of the aerosol generation device can be achieved while ensuring safety more appropriately.
(7) The power supply unit of the aerosol generation device according to any one of (1) to (6), further including:
   an MCU (an MCU 1) configured to control supply of power from the power supply to the heater, in which
   the MCU is configured to:
      when an output value of the first sensor (a power supply thermistor T1) is abnormal, execute a third protection control (protection control of a pattern PT1, a pattern PT2, and a pattern PT4 in FIG. 23) for prohibiting one or both of the charging and the discharging; and
      when an output value of the second sensor (a case thermistor T4) is abnormal, execute a fourth protection control (protection control of a pattern PT6 in FIG. 23) for prohibiting one or both of the charging and the discharging.

      According to (7), since the third protection control and the fourth protection control are executed by the MCU that operates most accurately among the ICs built in the aerosol generation device, these protection control can be executed at more appropriate timing.
(8) The power supply unit of the aerosol generation device according to (7), in which
   the MCU is configured to:
   when the output value of the first sensor is normal, terminate the third protection control (the protection control of the pattern PT1 and the pattern PT4 in FIG. 23); and
   when the output value of the second sensor is normal, terminate the fourth protection control (the protection control of the pattern PT6 in FIG. 23).

   According to (8), even when the protection control is executed by the MCU, if a normal state is reached, the protection control is automatically terminated without waiting for an operation of the user. Therefore, when the output value of the first sensor or the second sensor is abnormal for a short period of time, the protection control can be prevented from being executed for a long time, and marketability of the aerosol generation device can be improved.
(9) The power supply unit of the aerosol generation device according to any one of (1) to (6), further including:
   a case (a case 110) forming a surface of the power supply unit; and
   an MCU (an MCU 1) configured to control supply of power from the power supply to the heater, in which
   the first sensor (a power supply thermistor T1) is disposed in the vicinity of the power supply and configured to output a value related to a temperature of the power supply,
   the second sensor (a case thermistor T4) is disposed in the vicinity of the case and configured to output a value related to a temperature of the case,
   the MCU is configured to:
      acquire the temperature of the power supply based on the output value of the first sensor;
      acquire the temperature of the case based on the output value of the second sensor;
      when the temperature of the power supply is equal to or higher than a first threshold (a temperature threshold THH5: 51°C, or a temperature threshold THH4: 55°C), determine that the output value of the first sensor is abnormal, and execute a third protection control (protection control of a pattern PT1 and a pattern PT2 in FIG. 23) for prohibiting one or both of the charging and the discharging; and
      when the temperature of the case is equal to or higher than a second threshold (a temperature threshold THH6: 48°C), determine that the output value of the second sensor is abnormal, and execute a fourth protection control (protection control of a pattern PT6 in FIG. 23) for prohibiting one or both of the charging and the discharging, and
   the first threshold is different from the second threshold.

   According to (9), since an appropriate threshold can be set according to the temperature measurement target, the safety of the aerosol generation device is improved.
(10) The power supply unit of the aerosol generation device according to (9), in which
   the first threshold is higher than the second threshold.
   A case other than a heat source is not likely to become high in temperature. Accordingly, an abnormality and a normality can be distinguished even when the second threshold is set low. According to (10), since the low second threshold allows early detection of an abnormality regarding the temperature of the case, the safety of the aerosol generation device is improved.
(11) The power supply unit of the aerosol generation device according to any one of (1) to (6), further including:
   a case (a case 110) forming a surface of the power supply unit; and
   an MCU (an MCU 1) configured to control supply of power from the power supply to the heater, in which
   the first sensor (a power supply thermistor T1) is disposed in the vicinity of the power supply and configured to output a value related to a temperature of the power supply,
   the second sensor (a case thermistor T4) is disposed in the vicinity of the case and configured to output a value related to a temperature of the case,
   the MCU is configured to:
      acquire the temperature of the power supply based on the output value of the first sensor;
      acquire the temperature of the case based on the output value of the second sensor;
      when the temperature of the power supply is equal to or higher than a first threshold (a temperature threshold THH5: 51°C), determine that the output value of the first sensor is abnormal, and execute a third protection control (protection control of a pattern PT1 in FIG. 23) for prohibiting one or both of the charging and the discharging;
      when the temperature of the power supply is equal to or lower than a second threshold (a temperature threshold THH8: 45°C) that is less than the first threshold after execution of the third protection control, determine that the output value of the first sensor is normal, and terminate the third protection control;
      when the temperature of the case is equal to or higher than a third threshold (a temperature threshold THH6: 48°C), determine that the output value of the second sensor is abnormal, and execute a fourth protection control (protection control of a pattern PT6 in FIG. 23) for prohibiting one or both of the charging and the discharging; and
      when the temperature of the case becomes equal to or lower than a fourth threshold (a temperature threshold THH7: 47°C) that is less than the third threshold after execution of the fourth protection control, determine that the output value of the second sensor is normal, and terminate the fourth protection control, and
   a value obtained by subtracting the second threshold from the first threshold is different from a value obtained by subtracting the fourth threshold from the third threshold.

   According to (11), since an appropriate hysteresis according to the temperature measurement target is set in a threshold for determining an abnormality in an output value of a sensor, the safety of the aerosol generation device is improved.
(12) The power supply unit of the aerosol generation device according to (11), in which
   the value obtained by subtracting the second threshold from the first threshold is larger than the value obtained by subtracting the fourth threshold from the third threshold.
   A temperature of the case other than the heat source is not easily changed as long as the case is originally provided. Therefore, as in (12), by reducing a difference between the third threshold and the fourth threshold, it is possible to early detect an abnormality related to the temperature of the case by using a relatively low threshold while preventing the possibility that the fourth protection control is executed for a long period or frequently. As a result, the safety and convenience of the aerosol generation device are improved.
(13) The power supply unit of the aerosol generation device according to any one of (1) to (12), further including:
   a case (a case 110) forming a surface of the power supply unit; and
   an MCU (an MCU 1) configured to control supply of power from the power supply to the heater, in which
   the first sensor (a heater thermistor T3) is disposed in the vicinity of the power supply and configured to output a value related to a temperature of the heater,
   the second sensor (a case thermistor T4) is disposed in the vicinity of the case and configured to output a value related to a temperature of the case,
   when the output value of the first sensor is abnormal, a fifth protection control (protection control of a pattern PT5 in FIG. 23) for prohibiting one or both of the charging and the discharging is executed without using the MCU,
   the MCU is configured to execute a sixth protection control (protection control of a pattern PT6 in FIG. 23) for prohibiting one or both of the charging and the discharging when the output value of the second sensor is abnormal,
   the power supply unit is operable in a plurality of modes, and
   in a mode (a heating mode) in which the sixth protection control is not executable among the plurality of modes, the fifth protection control is executable.

   According to (13), since the fifth protection control based on an abnormality in the temperature of the heater, which is more important than the case, can be executed in a mode in which the sixth protection control cannot be executed, the safety of the aerosol generation device is improved.
(14) The power supply unit of the aerosol generation device according to (13), in which
   the plurality of modes include a heating mode in which power is discharged from the power supply to the heater, a sleep mode, and a pre-heating mode (an active mode and a heating initial setting mode) that needs to be passed to shift from the sleep mode to the heating mode,
   the sixth protection control is executable only in the pre-heating mode among the heating mode and the pre-heating mode.

According to (14), it is possible to determine whether the aerosol generation device is placed in a safe situation before generating the aerosol. When the aerosol generation device is placed in an environment not recommended, for example, it is not necessary to start heating of the heater, waste of the aerosol source can be avoided, and the convenience and safety of the aerosol generation device can be improved.

Although various embodiments have been described above with reference to the drawings, it is needless to say that the invention is not limited thereto. It is apparent to those skilled in the art that various modifications or corrections can be conceived within the scope described in the claims, and it is understood that the modifications or corrections naturally fall within the technical scope of the invention. In addition, respective constituent elements in the above embodiment may be optionally combined without departing from the gist of the invention.

The present application is based on the Japanese patent application (Japanese Patent Application No. 2021-079893) filed on May 10, 2021, and contents thereof are incorporated herein by reference.

### REFERENCE SIGNS LIST

100 inhaler
110 case
119 slider
150 chassis
170 heating unit
1 MCU
2 charging IC
9 step-up DC/DC converter
12 remaining amount meter IC
17 flip-flop
HTR heater
BAT power supply
Cn heater connector
T1 power supply thermistor
T2 puff thermistor
T3 heater thermistor
T4 case thermistor
Ch, Cu, Ct2, Ct3, and Ct4 capacitor
Nt1, Nt2, Nt3, Nt4, Nu, and Nb node
OPS operation switch
PT1 to PT8 pattern

## Claims

1. A power supply unit of an aerosol generation device, comprising:
a power supply;
a heater connector to which a heater configured to heat an aerosol source by consuming power supplied from the power supply is connected;
a first sensor disposed in the vicinity of the heater or the power supply and configured to output a value related to a temperature of the heater or a value related to a temperature of the power supply; and
a second sensor provided at a position separated from the first sensor and configured to output a value related to a temperature at the position, wherein
when at least one of the output value of the first sensor and the output value of the second sensor is abnormal, at least one or both of charging of the power supply and discharging from the power supply to the heater are temporarily prohibited.

2. The power supply unit of the aerosol generation device according to claim 1, further comprising:
an MCU configured to control supply of power from the power supply to the heater, wherein
when the output value of the first sensor is abnormal, a first protection control for prohibiting one or both of the charging and the discharging is executed without using the MCU, and
when the output value of the second sensor is abnormal, a second protection control for prohibiting one or both of the charging and the discharging is executed without using the MCU.

3. The power supply unit of the aerosol generation device according to claim 2, wherein
restart of the MCU is necessary for termination of the first protection control, and
restart of the MCU is necessary for termination of the second protection control.

4. The power supply unit of the aerosol generation device according to claim 2 or 3, wherein
the power supply unit is operable in a plurality of modes, and
in a mode in which one of the first protection control and the second protection control is not executable among the plurality of modes, the other of the first protection control and the second protection control is executable.

5. The power supply unit of the aerosol generation device according to claim 4, further comprising:
a case forming a surface of the power supply unit, wherein
the first sensor is disposed in the vicinity of the power supply and configured to output a value related to a temperature of the power supply,
the second sensor is disposed in the vicinity of the case and configured to output a value related to a temperature of the case, and
in a mode in which the second protection control is not executable among the plurality of modes, the first protection control is executable.

6. The power supply unit of the aerosol generation device according to claim 5,
wherein the first protection control is executable in all the modes.

7. The power supply unit of the aerosol generation device according to any one of claims 1 to 6, further comprising:
an MCU configured to control supply of power from the power supply to the heater, wherein
the MCU is configured to:
when an output value of the first sensor is abnormal, execute a third protection control for prohibiting one or both of the charging and the discharging; and
when an output value of the second sensor is abnormal, execute a fourth protection control for prohibiting one or both of the charging and the discharging.

8. The power supply unit of the aerosol generation device according to claim 7, wherein
the MCU is configured to:
when the output value of the first sensor is normal, terminate the third protection control; and
when the output value of the second sensor is normal, terminate the fourth protection control.

9. The power supply unit of the aerosol generation device according to any one of claims 1 to 6, further comprising:
a case forming a surface of the power supply unit; and
an MCU configured to control supply of power from the power supply to the heater, wherein
the first sensor is disposed in the vicinity of the power supply and configured to output a value related to a temperature of the power supply,
the second sensor is disposed in the vicinity of the case and configured to output a value related to a temperature of the case,
the MCU is configured to:
acquire the temperature of the power supply based on the output value of the first sensor;
acquire the temperature of the case based on the output value of the second sensor;
when the temperature of the power supply is equal to or higher than a first threshold, determine that the output value of the first sensor is abnormal, and execute a third protection control for prohibiting one or both of the charging and the discharging; and
when the temperature of the case is equal to or higher than a second threshold, determine that the output value of the second sensor is abnormal, and execute a fourth protection control for prohibiting one or both of the charging and the discharging, and
the first threshold is different from the second threshold.

10. The power supply unit of the aerosol generation device according to claim 9, wherein
the first threshold is higher than the second threshold.

11. The power supply unit of the aerosol generation device according to any one of claims 1 to 6, further comprising:
a case forming a surface of the power supply unit; and
an MCU configured to control supply of power from the power supply to the heater, wherein
the first sensor is disposed in the vicinity of the power supply and configured to output a value related to a temperature of the power supply,
the second sensor is disposed in the vicinity of the case and configured to output a value related to a temperature of the case,
the MCU is configured to:
acquire the temperature of the power supply based on the output value of the first sensor;
acquire the temperature of the case based on the output value of the second sensor;
when the temperature of the power supply is equal to or higher than a first threshold, determine that the output value of the first sensor is abnormal, and execute a third protection control for prohibiting one or both of the charging and the discharging;
when the temperature of the power supply is equal to or lower than a second threshold that is less than the first threshold after execution of the third protection control, determine that the output value of the first sensor is normal, and terminate the third protection control;
when the temperature of the case is equal to or higher than a third threshold, determine that the output value of the second sensor is abnormal, and execute a fourth protection control for prohibiting one or both of the charging and the discharging; and
when the temperature of the case becomes equal to or lower than a fourth threshold that is less than the third threshold after execution of the fourth protection control, determine that the output value of the second sensor is normal, and terminate the fourth protection control, and
a value obtained by subtracting the second threshold from the first threshold is different from a value obtained by subtracting the fourth threshold from the third threshold.

12. The power supply unit of the aerosol generation device according to claim 11, wherein
the value obtained by subtracting the second threshold from the first threshold is larger than the value obtained by subtracting the fourth threshold from the third threshold.

13. The power supply unit of the aerosol generation device according to any one of claims 1 to 12, further comprising:
a case forming a surface of the power supply unit; and
an MCU configured to control supply of power from the power supply to the heater, wherein
the first sensor is disposed in the vicinity of the power supply and configured to output a value related to a temperature of the heater,
the second sensor is disposed in the vicinity of the case and configured to output a value related to a temperature of the case,
when the output value of the first sensor is abnormal, a fifth protection control for prohibiting one or both of the charging and the discharging is executed without using the MCU,
the MCU is configured to execute a sixth protection control for prohibiting one or both of the charging and the discharging when the output value of the second sensor is abnormal,
the power supply unit is operable in a plurality of modes, and
in a mode in which the sixth protection control is not executable among the plurality of modes, the fifth protection control is executable.

14. The power supply unit of the aerosol generation device according to claim 13, wherein
the plurality of modes include a heating mode in which power is discharged from the power supply to the heater, a sleep mode, and a pre-heating mode that needs to be passed to shift from the sleep mode to the heating mode, and
the sixth protection control is executable only in the pre-heating mode among the heating mode and the pre-heating mode.
